Europäisches Patentamt

European Patent Office

Office européen des brevets

(19)

(11) EP 0 829 662 B1

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(51) Int Cl.⁷: **F16J 15/10**

(21) Anmeldenummer: **97115745.8**

(22) Anmeldetag: **10.09.1997**

(54) **Ein in sich geschlossenes, schnurförmig ausgebildetes Dichtungselement und Verfahren zu seiner Herstellung**

Seal made by a closed-loop of string-like element; method of manufacturing

Joint d'etanchéité constitué d'un cordon fermé sur lui-même; procédé de fabrication

(84) Benannte Vertragsstaaten:
**AT DE FR GB IT**

(30) Priorität: **11.09.1996 DE 19636929**

(43) Veröffentlichungstag der Anmeldung:
**18.03.1998 Patentblatt 1998/12**

(73) Patentinhaber: **W.L. GORE & ASSOCIATES GmbH**
**85640 Putzbrunn (DE)**

(72) Erfinder:
• **Gantner, Josef**
**85662 Hohenbrunn (DE)**
• **Wendl, Manfred**
**83026 Rosenheim (DE)**

(74) Vertreter: **Klunker . Schmitt-Nilson . Hirsch**
**Winzererstrasse 106**
**80797 München (DE)**

(56) Entgegenhaltungen:
**WO-A-94/24467          WO-A-96/07842**
**GB-A- 238 853          US-A- 5 364 699**

## Beschreibung

Die Erfindung betrifft ein in sich geschlossenes, schnurförmig ausgebildetes Dichtungselement, das sich insbesondere zur Abdichtung von Flanschen eignet. Ferner bezieht sich die Erfindung auf ein Verfahren zur Herstellung eines solchen Dichtungselements.

Der Stand der Technik

Es ist bekannt, Rundschnurdichtungen, insbesondere als Flanschdichtungen, aus expandiertem Polytetrafluorethylen (ePTFE) herzustellen. Beispielsweise wird für die Herstellung derartiger Dichtungen uniaxial gerecktes, expandiertes Polytetrafluorethylen verwendet. Derartige bekannte Rundschnurdichtungen lassen jedoch bezüglich der Querfestigkeit, des Kaltflusses und des Setzverhaltens noch wesentlich zu wünschen übrig, darüber hinaus sind Schließstellen zum Beispiel durch Überlappung bei derartigen Dichtungen erforderlich. Bei lediglich uniaxial gereckten ePTFE-Dichtungen tritt ein starkes Setzen des Materials durch Querverfließen sowie ein starker Kaltfluß ("creep") in Querrichtung auf.

Aus der US-PS 5 281 475 ist eine kontinuierliche PTFE-Faser bekannt, beispielsweise in der Form einer Litze, eines Fadens, einer Stange oder eines Rohres, wobei diese Faser eine schraubenlinienförmig gerollte, in sich selbst anhaftende, kontinuierliche Folie aus PTFE aufweist. Ferner weist diese Faser eine Außenoberfläche mit einem im wesentlichen runden Profil und einer einzelnen, spiralförmig verlaufenden Naht auf. Die kontinuierliche Folie aus PTFE kann mit teilchenförmigen Füllern gefüllt sein oder mit polymeren Materialien vor der Herstellung der kontinuierlichen, im wesentlichen runden PTFE-Faser beschichtet sein. Die kontinuierliche Schicht aus PTFE kann zum Kombinieren mit anderen Elementen, beispielsweise fadenförmigen Elementen oder folienartigen Elementen innerhalb der kontinuierlichen, im wesentlichen runden PTFE-Faser vorgesehen sein.

Unter "schraubenlinienförmig gerollt" ist hierbei zu verstehen, daß die resultierende PTFE-Faser eine spiralförmige Struktur erhält, die durch Wickeln der kontinuierlichen PTFE-Folie um eine mittlere Längsachse der Faser in Längsrichtung der Faser gebildet wird. Bei der hierbei verwendeten PTFE-Folie handelt es sich insbesondere um eine Folie aus expandiertem, mikroporösen Polytetrafluorethylen.

Eine ähnliche PTFE-Faser ist aus der US-PS 5 364 699 bekannt, wobei diese Faser verschiedene Elemente, wie zum Beispiel fadenförmige Elemente oder folienartige Elemente neben den Schichten der schraubenlinienförmig gerollten, selbst anhaftenden, kontinuierlichen Folie aus PTFE enthalten kann. Bei derartigen fadenförmigen Elementen kann es sich beispielsweise um leitfähige Drähte, optische Fasern oder feine Röhren handeln.

In der US-Patentanmeldung Nr. 08/050903 mit Anmeldedatum vom 20.04.1993 ist ferner ein Verbund-Dichtungsmaterial beschrieben, das einen Kern aus einem langgestreckten Polytetrafluorethylen sowie wenigstens eine Folie aus einem porösen expandierten Polytetrafluorethylen aufweist, wobei diese Folie um den Kern beispielsweise schaubenlinienförmig herumgewickelt ist.

Darüber hinaus ist in der WO 96 07842 A ein aus einer Folie aus expandiertem Polytetrafluorethylen spiralig zu einer Dichtungsschnur gewickeltes Dichtungselement beschrieben, welches einen relativ geringen Kaltfluß aufweist.

Poröses, expandiertes Polytetrafluorethylen (ePTFE) ist allgemein aus der US-PS 3 953 566 bekannt. Poröses, expandiertes Polytetrafluorethylen weist eine höhere Festigkeit als die nicht expandierte Form von PTFE auf, besitzt die chemische Inertanz von herkömmlichem PTFE und, wenn es als ein Dichtungselement verwendet wird, weist es bei seiner Anwendung einen großen Temperaturbereich bis zu ca. 350°C auf. Ein Beispiel eines Dichtungsmaterials aus porösem, expandierten Polytetrafluorethylen ist GORE-TEX® Joint Sealant, das durch W.L. Gore & Associates, Inc. Elkton, MD, USA, hergestellt wird.

Infolge dimensionsmäßiger Änderungen aufgrund von Kaltfluß erfordern viele im Handel erhältliche PTFE-Dichtungen eine zusätzliche Klemmkraft, die einige Zeit nach dem Einbau der Dichtung auf die Dichtung aufgebracht werden muß. Dies stellt bei einem Dichtungsmaterial eine außerordentlich unerwünschte Eigenschaft dar. Eine wiederholte Einstellung der Klemmkraft ist bei Anwendungen nicht möglich, bei denen eine spezifische Höhe der Dichtung während der Anwendung aus Funktions- und Sicherheitsgründen aufrechterhalten werden muß. Wenn beispielsweise solche Dichtungen als statische Dichtungselemente zwischen Mehrfachplatten von Wärmeaustauschern und Rahmenfiltern verwendet werden, überlagert sich eine durch Kaltfluß bedingte Dickeverminderung des Dichtungsmaterials zwischen den Platten und, wenn dies durch die Anzahl der Platten in der Einheit vervielfacht wird, kann dies in einer beträchtlichen Herabsetzung der Dichtungsklemmkraft resultieren, was zu erheblichen Leckageproblemen führen kann, die nicht behoben werden können.

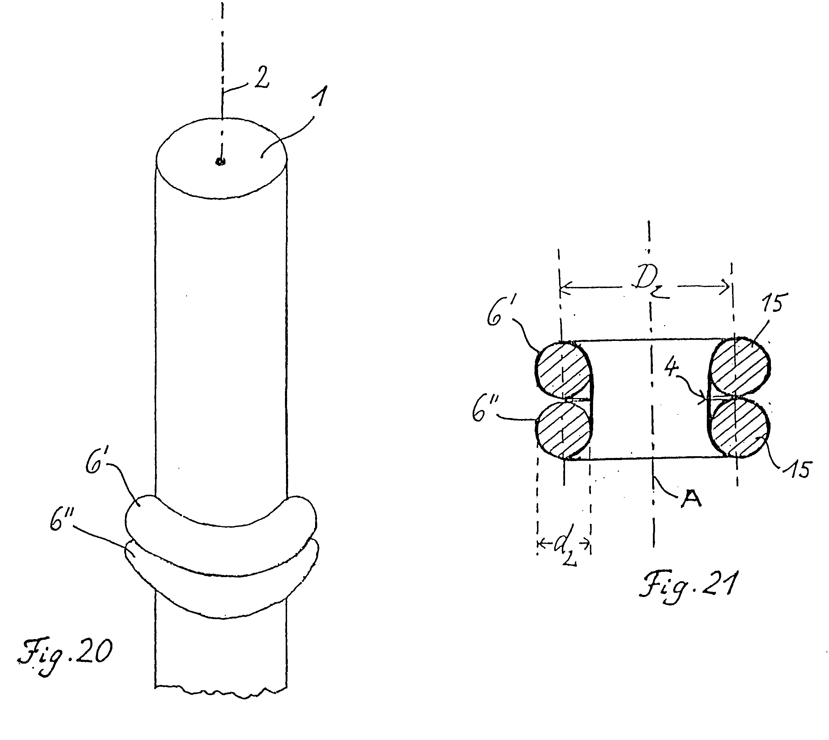

Von der Firma W.L. Gore & Associates, Inc., USA, wird eine große Anzahl von Dichtungsmaterialien hergestellt, die einen Kern aus einem porösen, expandierten Polytetrafluorethylen aufweisen, welcher in ein Band aus expandiertem Polytetrafluorethylen gewickelt ist. Ein im Handel erhältliches Beispiel für derartiges Dichtungsmaterial ist GORE-TEX®-Dichtungsmaterial zur Verwendung beim Abdichten von Plattenwärmetauschern. Der Vorteil einer derartigen zweistufigen Konstruktion besteht darin, daß die Umwicklung des Kernmaterials mit einem Band höherer Festigkeit dazu neigt, dem Fluß des Kernmaterials aus seiner ursprünglichen Dimension heraus zu widerstehen (d.h., die Bandumwicklung begrenzt eine transversale Ausbreitung des Kerns bei Beanspruchung). Während dieses Material ziemlich gut arbeitet, so liegt dennoch immer ein Bedürfnis nach einem verbesserten Dichtungsmaterial aus expandiertem PTFE vor, welches Kaltfluß widersteht. Fig. 8 zeigt beispielsweise ein herkömmliches Dichtungselement 30 aus expandiertem Polytetrafluorethylen (ePTFE). Aufgrund der Neigung des Materials dieses Dichtungselements 30 zum Kaltfluß, wenn es einer Kompressionskraft in der Z-Richtung über die Zeit unterworfen wird, neigt das Material dazu, sich in der Y-Richtung und zu einem geringen Grade auch in der X-Richtung auszubreiten, wodurch die durch dieses Material gelieferte Dichtung beeinträchtigt wird. Der Widerstand gegenüber dem Kaltfluß ist somit primär in der Längs- oder X-Richtung gegeben, jedoch ist es für eine optimale Dichtungsfunktion erforderlich, daß ein Widerstand gegenüber Kaltfluß sowohl in der Längs- bzw. X-Richtung als auch in der Quer- bzw. Y-Richtung vorliegt.

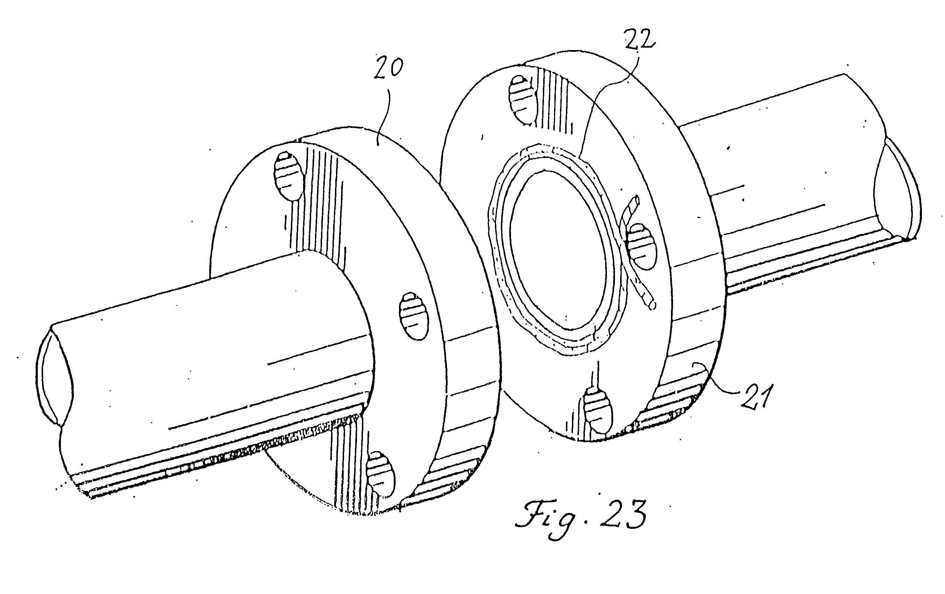

Fig. 23 zeigt ferner ein Ausführungsbeispiel einer Dichtungsschnur 22, wie diese in der bereits oben genannten WO 96 07842 A beschrieben ist, wobei eine derartige Dichtungsschnur 22 als Flanschdichtung zwischen zwei Flanschen 20 und 21 angewendet wird. In diesem Anwendungsfalle erweist sich die erforderliche Schließstelle durch Überlappung bei der Dichtungsschnur ebenfalls als nachteilig.

Aus der DE-PS 111 35 56 ist eine Vorrichtung zum Herstellen gewickelter Ringkörper aus in gewissem Maße nachgiebigem Material, wie vorzugsweise mit Kautschuk, Kunstharz oder dergleichen imprägnierten Geweben oder Gewirken, Folien, Platten oder Lagen aus Kautschuk, Papier oder Metall bekannt, wobei diese Vorrichtung einen Dorn aufweist, über dem ein Stülpstrumpf angeordnet ist, auf den das zu wickelnde Material aufgebracht und zum Wickeln des Materials der Strumpf unter Umstülpen vom Dorn abgezogen wird. Beispielsweise kann bei dieser bekannten Vorrichtung der auf den Dorn aufgezogene Stülpstrumpf ein Schlauchabschnitt aus Gummi oder aus einem anderen hinreichend biegsamen oder elastischen Stoff mit oder ohne Einlage sein, andererseits kann dieser Stülpstrumpf aber auch aus einer Mehrzahl einzelner Bänder gebildet sein. Die durch diese bekannte Vorrichtung herstellbaren Ringkörper können beispielsweise als Keilriemenrohlinge oder als ähnliche endlose Ringkörper verwendet werden.

Einen ähnlichen ringförmigen elastischen Streifen, insbesondere zur Verwendung als Staßdämpfer in einem Flugzeugfahrwerk, beschreibt die GB 238 853 A. Demnach wird eine Gummifolie auf einen Dorn gewickelt und die Stoßenden miteinander zu einer Spiralförmig verlaufenden Naht verschweißt, wodurch ein einschichtiger Schlauch entsteht. Der Schlauch wird dann entlang der Achse des Dorns zu einem Ring aufgewickelt und umflochten.

Mit Rücksicht auf den oben geschilderten Stand der Technik liegt der vorliegenden Erfindung die Aufgabe zugrunde, ein Dichtungselement anzugeben, das sich durch ein erheblich reduziertes Querverfließen sowie ein stark verbessertes Setzverhalten auszeichnet. Beim Verpressen des Dichtungselements durch beispielsweise Schraubenkräfte im Fall einer Flanschverbindung soll sich das Spannungsmaximum zentrisch in einem verpreßten Dichtungsabschnitt auf einer nur kleinen Fläche konzentrieren.

Darüber hinaus liegt der vorliegenden Erfindung die Aufgabe zugrunde, ein Verfahren anzugeben, mit dem in einer verhältnismäßig einfachen sicheren kostengünstigen Weise ein in sich geschlossenes Dichtungselement erzeugt werden kann, welches sich durch das Fehlen von Schließstellen auszeichnet.

Erfindungsgemäß wird diese Aufgabe durch ein Dichtungselement gelöst, das wenigstens aus einem spiralig gerolltem folienförmigen Material aus expandiertem Polytetrafluorethylen (ePTFE), besteht, wobei das Dichtungselement über seinen Schnurquerschnitt einen Dichtegradienten aufweist, der von der Außenseite des Dichtungselements ausgehend in Richtung zu dessen Querschnittsmittelpunkt zunimmt. Vorzugsweise besteht das Dichtungselement aus einem ringförmigem Gebilde, das einen im wesentlichen kreisförmigen Querschnitt aufweist.

Darüber hinaus wird durch die vorliegende Erfindung ein Dichtungselement geschaffen, das ein zweites ringförmiges Gebilde aufweist, welches mit dem ersten ringförmigem Gebilde durch einen schlauchförmigen Zwischenbereich aus demselben folienförmigen Material verbunden ist. Die beiden ringförmigen Gebilde können auch in einem vorgegebenen Abstand voneinander angeordnet sein, wobei der schlauchförmige Zwischenbereich zusätzlich mit einem Beschichtungsmaterial, insbesondere einem Verstärkungsmaterial laminiert sein kann. Bei bestimmten Anwendungsfällen kann es von Vorteil sein, wenn die beiden ringförmigen Gebilde unmittelbar aneinander angrenzen.

Vorzugsweise handelt es sich bei dem Folienmaterial um biaxial gerecktes Polytetrafluorethylen. Auch ein multiaxial gerecktes PTFE kann zum Einsatz kommen.

Zur Anpassung des Dichtungselements an unterschiedliche Einsatzfälle kann es mehrere folienförmige Materialien mit unterschiedlichen Eigenschaften aufweisen, wobei diese Eigenschaften über die Dicke der Dichtung asymmetrisch verteilt sein können. Die asymmetrische Verteilung kann beispielsweise darauf beruhen, daß ein beschichtetes folienförmiges Material verwendet wird. Als Beschichtung kommen Fluorpolymere, z.B. Fluorethylenpropylen (FEP) oder Perfluoralkoxy (PFA), oder Elastomere, z.B. Fluorelastomere in Frage. Das Material kann auch mit einem Elastomer gefüllt oder imprägniert sein.

Der Dichtegradient wird vorzugsweise so gewählt, daß die Dichte an der Außenseite des Elements ca. 0,1 $g/cm^3$ beträgt, was etwa der Dichte des Ausgangsmaterials entspricht und im Bereich des Querschnittmittelpunkts kann die Dichte maximal ca. 2,2 $g/cm^3$ betragen, was etwa der Dichte des Vollmaterials entspricht.

Das erfindungsgemäße Verfahren zur Herstellung eines in sich geschlossenen, schnurförmig ausgebildeten, mehrschichtig aufgebauten Dichtungselements zeichnet sich durch folgende Verfahrensschritte aus:

a) wenigstens ein folienförmiges Material (3) aus expandiertem Polytetrafluorethylen (ePTFE) mit zunächst gleichförmiger Dichteverteilung und mit vorgegebener Breite wird solange auf einen langgestreckten Dorn in dessen Umfangsrichtung ($Pf_2$) gewickelt, bis eine erwünschte Wickelstärke ($d_1$) eines resultierenden Materialwickels (4) auf dem Umfang des Dorns (1) erreicht ist;

b) der Materialwickel (4) wird im Bereich des einen stirnseitigen Endes des Dorns (1) beginnend in Richtung der Achse (2) des Dorns (1) entlang des Umfangs des Dorns durch einen auf den Materialwickel (4) einwirkenden Umrollvorgang im wesentlichen bis zu dem Bereich des entgegengesetzten stirnseitigen Endes des Dorns (1) umgerollt, so daß im wesentlichen ein ringförmiges Gebilde (6) aus dem umgerollten Materialwickel (4) erzeugt wird;

c) das ringförmige Gebilde (6) wird sodann auf einem Dorn einer thermischen Behandlung unterworfen, wobei es derart schrumpft, daß es über den Querschnitt des ringförmigen Gebildes (6) einen Dichtegradienten erhält, wodurch die Dichte des expandierten Polytetrafluorethylens (ePTFE) von der Außenseite des ringförmigen Gebildes (6) ausgehend in Richtung zu dessen Querschnittsmittelpunkt zunimmt.

Mit dem beschriebenen Verfahren werden vorzugsweise ringförmige Dichtungen erzeugt. Es sind aber natürlich auch ovale oder eckige Formen möglich. Durch das Rollen entsteht zunächst ein im wesentlichen kreisförmiger Querschnitt. Für besondere Anwendungsfälle kann dieser Querschnitt aber auch durch eine entsprechende Verformung geändert und vorzugsweise in eine rechteckige Form gebracht werden.

Die thermische Behandlung kann auf dem gleichen Dorn stattfinden, auf dem der Umrollvorgang stattfindet, vorzugsweise wird aber ein Dorn kleineren Durchmessers verwendet, um der beim Schrumpfen stattfindenden Materialkontraktierung zu entsprechen.

Für bestimmte Anwendungsfälle kann es sinnvoll sein auf dem Dorn einen zweiten Wickel vorzusehen, wobei das folienförmige Material auf dem Dorn in entgegengesetzter Richtung zum ersten Wickel aufgerollt wird, so daß ein Dichtungselement aus zwei sich gegenüberliegenden ringförmigen Gebilden entsteht.

Bedingt durch die Wärmezufuhr bei der thermischen Behandlung schrumpft das Material der Dichtung, was zu einer Spannungskonzentration im Material führt und dadurch verursacht zu einer Verdichtung. Vorzugsweise erfolgt nach dem Schrumpfen noch ein Sintervorgang. Durch das Sintern wird die erreichte Materialstruktur verfestigt. Die Dauer der thermischen Behandlung beträgt zwischen 1 Minute und 2 Stunden, vorzugsweise liegt sie im Bereich von 3 Minuten bis 40 Minuten.

Beim Umsetzen des ringförmigen Gebildes auf einen kleineren Dorn zur thermischen Behandlung wird vorzugsweise der Durchmesser des kleineren Dorns so gewählt, daß er mit dem Schrumpfungsgrad des Folienmaterials übereinstimmt, so daß nach dem Schrumpfen der Innendurchmesser des ringförmigen Gebildes dem Durchmesser des Dorns entspricht.

Für bestimmte Anwendungszwecke kann es vorteilhaft sein, die beiden Materialwickel auf dem Dorn nicht soweit aufeinander zuzuwickeln, bis sie sich berühren, sondern in einer Lage zu belassen, in der sie einen gewissen Abstand voneinander aufweisen. Der schlauchförmige Zwischenbereich kann vor der thermischen Behandlung zusätzlich mit einem Beschichtungsmaterial, insbesondere Verstärkungsmaterial, laminiert und dann erst wärmebehandelt werden.

Für bestimmte Anwendungszwecke können die beiden Materialwickel auch so durchgeführt werden, daß die beiden ringförmigen Gebilde unterschiedliche Dicken erhalten. Auch kann nur eines der beiden ringförmigen Gebilde auf einen Dorn kleineren Durchmessers übertragen werden, so daß beim Schrumpfen nur dieses Gebilde einen kleineren Durchmesser erhält, wodurch ein im wesentlichen doppelt ringförmig ausgebildetes Dichtungselement in konischer Ausgestaltung erzeugt wird.

Die Temperaturzufuhr zum Schrumpfen erfolgt entweder über einen beheizten Dorn, wobei der Dorn vorzugsweise auf eine Temperatur im Bereich zwischen ca. 327°C und 420°C beheizt wird. Die Wärmezufuhr kann aber auch durch Konvektion und/oder Strahlung, beispielsweise in einem Konvektionsofen vorgenommen werden.

Um eine asymmetrische Verteilung der Materialeigenschaften über die Dicke des resultierenden ringförmigen Gebildes zu erzielen, können mehrere folienförmige Materialbahnen, insbesondere mit unterschiedlichen Eigenschaften, von jeweils vorgegebener Breite in Richtung der Achse des Dornes aufeinanderfolgend auf den Dorn gewickelt werden, wobei sich die Materialbahnen zumindest teilweise gegenseitig überlappen.

Um dem ringförmigen Gebilde eine möglichst gleichförmige Dicke zu verleihen, wird das zu wickelnde folienförmige Material mit einem schräggeschnittenen Anfangsrand, sowie mit einem schräggeschnittenen Endrand versehen, um im Zuge des Wickelprozesses jeweils schraubenlinienförmig verlaufende Anfangs- und Endbereiche des resultierenden Materialwickels zu erzeugen.

Die Form des Dorns ist im wesentlichen zylindrisch, es können aber auch leicht konische Profile eingesetzt werden. Auch hat sich als vorteilhaft erwiesen, wenn das Dichtungselement nach dem Schrumpfen bzw. Sintern einem erneuten Recken unterworfen wird.

Darüber hinaus besteht beim erfindungsgemäßen Verfahren noch die Möglichkeit, daß beim Umrollprozeß zur Bildung des im wesentlichen ringförmigen Gebildes bzw. der beiden im wesentlichen ringförmigen Gebilde auf dem Dorn zusätzlich ein bzw. mehrere tubusförmige Elemente, insbesondere Drähte, Spiralfedern, O-Ringe oder dergleichen als Kern bzw. Kerne miteingerollt werden (zum Beispiel elastischer Vollrund- oder Rohrquerschnitt). Infolgedessen können im wesentlichen ringförmige Bauelemente, beispielsweise Dichtungsringe, mit tubusförmigem Kern hergestellt werden.

Ferner läßt sich in vorteilhafter Weise der Durchmesser des im wesentlichen ringförmigen Gebildes bzw. der beiden im wesentlichen ringförmigen Gebilde in Abhängigkeit von der Wickelstärke $d_1$ des Materialwickels und/oder von der Breite h des Materialwickels und/oder vom Durchmesser $D_1$ des Materialwickels einstellen.

Gemäß weiterer vorteilhafter Verfahrensausgestaltung kann als Dorn ein im wesentlichen zylindrischer Körper, insbesondere Rohrabschnitt, oder, alternativ hierzu, ein im wesentlichen konischer Körper, insbesondere Rohrabschnitt, verwendet werden. So kann beispielsweise als Dorn ein Rohrabschnitt verwendet werden, der in Wickelrichtung konisch zu- oder abnehmend ist, so daß beispielsweise Spannungen in dem resultierenden, im wesentlichen ringförmigen Bauelement gesteuert werden können.

Schließlich kann im Zuge des erfindungsgemäßen Herstellungsverfahrens noch vorgesehen werden, daß das resultierende, im wesentlichen ringförmig bzw. doppelt ringförmig ausgebildete Bauelement im Anschluß an die Abnahme von dem Dorn einem erneuten Recken unterworfen wird, um verbesserte Festigkeitseigenschaften zu erzielen. Hierdurch läßt sich insbesondere eine erhöhte Zugfestigkeit in X-Richtung erzeugen. Bezüglich des Reckens von Polytetrafluorethylen wird auf die US-Patentschriften Nr. 3 953 566 und 4 187 390 verwiesen.

Das erfindungsgemäße Verfahren besitzt insbesondere die folgenden Vorteile:

Möglichkeit zur Herstellung von im wesentlichen ringförmigen bzw. doppelt ringförmigen Dichtungselementen mit einem Dichtegradienten über den jeweiligen Ringquerschnitt der Dichtungselemente, wobei dieser Dichtegradient dafür sorgt, daß sich das aus Schraubenkräften, zum Beispiel einer Flanschdichtung, herrührende Spannungsmaximum der Dichtung zentrisch in dem verpressten Dichtungsquerschnitt auf einer kleinen Fläche konzentriert (bei orthogonaler Draufsicht auf die Flanschfläche mit verpresstem Dichtungselement) und somit in hohen Flächenpressungen bei kleinen Schraubenkräften resultiert. Ein derartiger Dichtegradient ist insbesondere bei einer Dichtung aus mikroporösem Material außerordentlich vorteilhaft, da das Leckageverhalten maßgeblich von der Anfangsverpressung (in der Regel größer als 20 MPa) und infolgedessen von der Dichte des expandierten Polytetrafluorethylens (ePTFE) abhängt.

Durch das Bestreben des in dem nach dem erfindungsgemäßen Verfahren hergestellten Dichtungselement vorhandenen folienförmigen Materials in Form einer biaxial gereckten expandierten Polytetrafluorethylen-Membrane, unter Temperaturbeaufschlagung infolge der vorgesehenen thermischen Behandlung entgegen der ursprünglichen Orientierungsrichtung zu schrumpfen, kommt es bei diesem Material zu einem Schrumpfbestreben sowohl in tangentialer Richtung zum Umfang des entsprechenden ringförmigen Gebildes (entspricht Maschinenrichtung der Membrane und Dornumfangsrichtung) als auch in tangentialer Richtung zum Querschnittsumfang des ringförmigen Gebildes (entspricht Transversalrichtung der Membrane). Da das im wesentlichen ringförmige Gebilde spiralförmig in sich gewickelt ist, setzt sich diese Schrumpfkraft ununterbrochen von außen nach innen spiralig über den Ringquerschnitt fort. Diese zum Querschnittsumfang des ringförmigen Gebildes tangentialen Schrumpfkräfte führen, da sie, diskret betrachtet, tangential auf ein Spiralsegment wirken, zu über den Umfang verteilten, zum Querschnittszentrum gerichteten Kräften, die sich integral mit der Lagenzahl des folienförmigen Materials von außen gerechnet und somit abnehmendem Abstand zum Querschnittsmittelpunkt verstärken. Diese resultierenden, zum Querschnittsmittelpunkt gerichteten Kräfte bewirken den erfindungsgemäß vorgesehenen, von außen nach innen verlaufenden Dichtegradienten. Möglichkeit der Herstellung biaxial orientierter Dichtringe mit erheblich reduziertem Querverfließen und stark verbessertem Setzverhalten. Durch die selbst nach dem Schrumpfen noch vorhandene Matrixzugfestigkeit des Materials in Querschnittsumfangsrichtung wird ein Querverfließen des Dichtungselements verhindert bzw. reduziert, was zusätzlich zu dem oben erläuterten Mechanismus die Konzentration der Spannung auf die Flächenmittelachse, herrührend von der Massenverteilung im kreisförmigen Querschnitt, begünstigt (in der Mitte verbleibt mehr Masse, was bei gleicher Verpreßhöhe zu lokal höherer Dichte in der Mitte führt).

Möglichkeit der Herstellung endloser Dichtringe mit praktisch beliebigen Durchmessern (sowohl Flansch- als auch Querschnittsdurchmessern);

Erzielung einer großen Bandbreite an Querschnittsdurchmessern des resultierenden, im wesentlichen ringförmigen Bauelements (in Abhängigkeit von der Dicke und der Wickelzahl des verwendeten Materials, insbesondere einer Membrane aus biaxial gerecktem ePTFE);

gleichzeitiges Einrollen eines tubusförmigen Kerns in das im wesentlichen ringförmige Bauelement;

Erzeugung relativ dünner Monofilamentringe aufgrund eines nochmaligen Reckens im Anschluß an die Herstellung des im wesentlichen ringförmigen Bauelements;

Möglichkeit der Herstellung von Dichtringen mit Komposit-Aufbau (ePTFE/Polymerfolien-Laminate als funktionelle Schichten);

Vermeidung von Schließstellen durch Überlappung und damit von Schwachstellen bei dem resultierenden Dichtungselement.

Das erfindungsgemäße Verfahren läßt sich beispielsweise zur Herstellung von statischen Dichtringen, Gleitrohrdichtungen, Wellendichtringen, darüber hinaus aber auch von elektrischen Kondensatoren und dergleichen verwenden.

Die vorliegende Erfindung wird nunmehr im Rahmen von Ausführungsbeispielen näher erläutert, wobei auf die beigefügten Zeichnungen Bezug genommen wird. Dabei zeigen:

Fig. 1 schematisch eine perspektivische Ansicht eines im wesentlichen zylindrischen Dorns, auf dessen Umfang ein folienförmiges Material gemäß einer ersten Ausführungsform gewickelt wird;

Fig. 2 eine perspektivische Teilansicht des resultierenden Materialwickels auf dem Dorn gemäß Fig. 1;

Fig. 3 schematisch eine perspektivische Ansicht eines im wesentlichen zylindrischen Dorns, auf dessen Umfang ein folienförmiges Material gemäß einer zweiten Ausführungsform gewickelt wird;

Fig. 4 eine perspektivische Teilansicht des resultierenden Materialwickels auf dem Dorn gemäß Fig. 3;

Fig. 5 eine schematische, perspektivische Ansicht des Dorns mit dem auf ihm befindlichen Materialwickel gemäß Fig. 4, wobei aus diesem Materialwickel durch einen auf ihn einwirkenden, fortlaufenden Umrollvorgang in Achsrichtung des Domes ein Ring erzeugt wird;

Fig. 6 eine der Fig. 5 entsprechende Ansicht mit dem nunmehr vollständig zu einem fertigen Ring umgerollten Materialwickel;

Fig. 7A schematisch eine perspektivische Ansicht des von dem Dorn abgenommenen, fertigen Rings;

Fig. 7B schematisch eine Axialschnittansicht durch den fertigen Ring;

Fig. 7C schematisch eine Axialschnittansicht durch eine weitere Ausführungsform eines im wesentlichen ringförmig ausgebildeten Bauelements;

Fig. 7D schematisch einen Querschnitt einer anderen Ausführungsform eines ringförmigen Gebildes;

Fig. 7E schematisch einen Querschnitt einer weiteren Ausführungsform eines ringförmigen Gebildes;

Fig. 8 schematisch eine perspektivische Teilansicht eines herkömmlichen Dichtungselements;

Fig. 9 eine der Fig. 7B entsprechende Axialschnittansicht zur genaueren Veranschaulichung des Querschnitts des resultierenden ringförmigen Gebildes;

Fig. 10 eine Ansicht einer Einzelheit des in Fig. 9 dargestellten Querschnitts gemäß einer ersten Ausführungsform;

Fig. 11 eine der Fig. 10 entsprechende Ansicht gemäß einer zweiten Ausführungsform;

Fig. 12 eine der Fig. 1 entsprechende Ansicht zur Veranschaulichung einer weiteren Verfahrensausgestaltung;

Fig. 13 eine der Fig. 2 entsprechende Ansicht zur Veranschaulichung eines Materialwickels, wie er im Zuge der Verfahrensausgestaltung nach Fig. 12 erzeugt wird;

Fig. 14 eine der Fig. 12 entsprechende Ansicht zur Veranschaulichung einer abgewandelten Ausführungsform;

Fig. 15 eine der Fig. 13 entsprechende Ansicht zur Veranschaulichung einer abgewandelten Ausführungsform;

Fig. 16 eine der Fig. 4 entsprechende Ansicht zur Veranschaulichung einer abgewandelten Ausführungsform;

Fig. 17 eine schematische perspektivische Ansicht eines Dorns mit einem auf ihm befindlichen Materialwickel, aus dem durch zwei einander entgegengesetzt gerichtete Umrollvorgänge in Achsrichtung des Dorns ein erstes ringförmiges Gebilde und ein zweites ringförmiges Gebilde erzeugt werden;

Fig. 18 schematisch eine Axialschnittansicht durch das gemäß Fig. 17 erzeugte, doppelt ringförmig ausgebildete Bauelement;

Fig. 19 schematisch eine teilweise Schnittansicht einer langgestreckten folienförmigen Materialbahn, die auf einen Dorn gemäß Fig. 3 gewickelt wird;

Fig. 20 schematisch eine perspektivische Ansicht eines Dorns, auf dessen Umfang ein erstes ringförmiges Gebilde sowie ein zweites ringförmiges Gebilde unmittelbar einander gegenüberliegen;

Fig. 21 schematisch eine Axialschnittansicht durch ein gemäß Fig. 20 erzeugtes doppelt ringförmig ausgebildetes Bauelement;

Fig. 22 schematisch die Anwendung eines erfindungsgemäß ausgebildeten Dichtungselements als Flanschdichtung;

Fig. 23 schematisch die Anwendung einer bekannten Rundschnurdichtung als Flanschdichtung;

Fig. 24 eine weitere Axialschnittansicht durch ein fertiges ringförmiges Dichtungselement;

Fig. 25 eine graphische Darstellung zur Veranschaulichung des Dichtegradienten über den kreisförmigen Querschnitt des ringförmigen Dichtungselements gemäß Fig. 24; und

Fig. 26 schematisch eine Axialschnittansicht durch ein doppelt ringförmig ausgebildetes Dichtungselement in einer im wesentlichen konischen Gesamtausgestaltung.

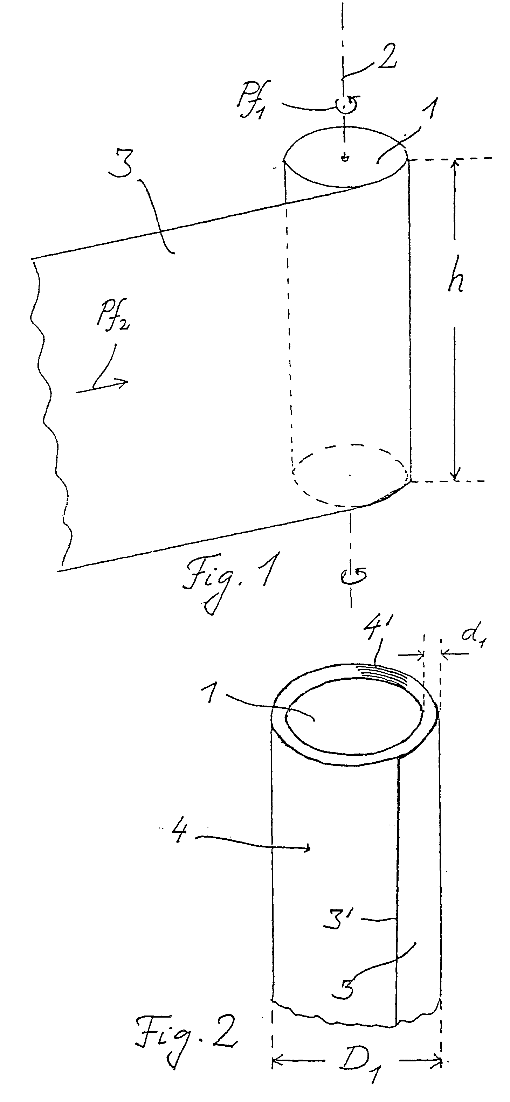

Gemäß Fig. 1 wird beispielsweise zur Herstellung eines im wesentlichen ringförmig ausgebildeten, mehrschichtig aufgebauten Dichtungselements zunächst ein folienförmiges Material 3 in Form einer Membrane aus einem biaxial gereckten, expandierten Polytetrafluorethylen (ePTFE) mit einer vorgegebenen Breite h in Richtung des Pfeiles $Pf_2$ auf einen im wesentlichen zylindrischen Dorn 1 gewickelt. Der Dorn 1 weist eine Rotationsachse 2 auf, wobei die Rotationsrichtung durch einen Pfeil $Pf_1$ angedeutet ist.

Das folienförmige Material 3 (Membrane) wird kontinuierlich auf den Umfang des Dornes 1 gewickelt, bis eine erwünschte Wickelstärke $d_1$ eines Materialwickels 4 erreicht ist, wie aus Fig. 2 ersichtlich. Der Wickelvorgang wird sodann abgebrochen, wobei das äußere Ende des Materialwickels 4 durch einen gerade geschnittenen äußeren Rand des ringförmigen Materials 3 gebildet wird. Die durch das gewickelte folienförmige Material gebildeten, aufeinanderliegenden Wickellagen des resultierenden Materialwickels 4 sind mit 4' bezeichnet.

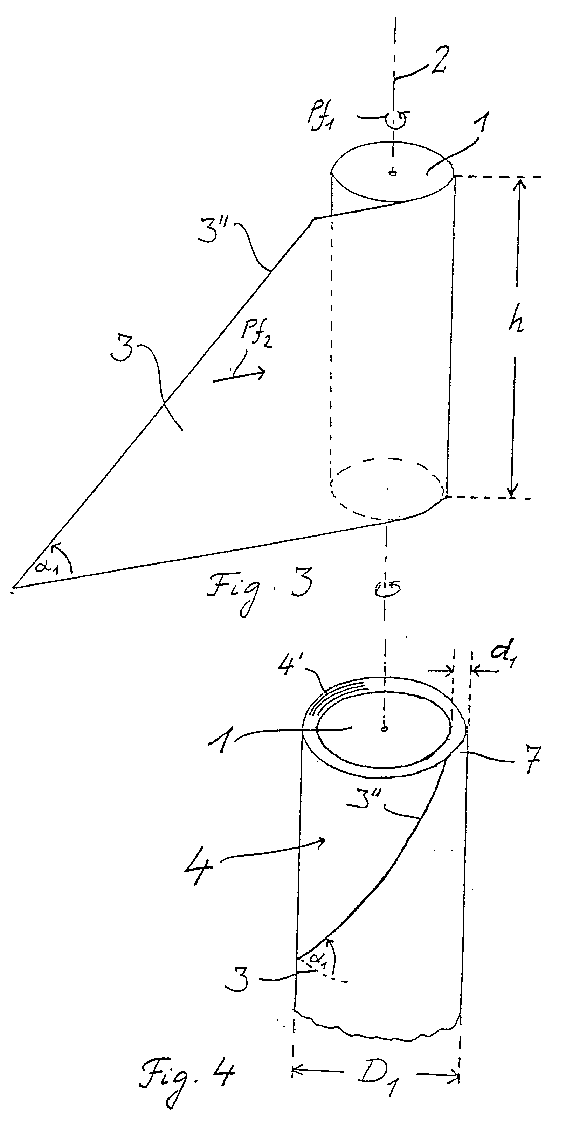

Fig. 3 zeigt eine gegenüber der Fig. 1 insofern abgewandelte Ausführungsform, als nunmehr das folienförmige Material 3 mit einem schräg geschnittenen Endrand 3" versehen ist. Fig. 19 zeigt schematisch eine teilweise Seitenansicht eines vollständig auseinandergelegten, folienförmigen Materials 3, wobei zu erkennen ist, daß das folienförmige Material 3 sowohl einen schräg geschnittenen Anfangsrand 3''', mit dem es zunächst auf den Dorn 1 beginnend gewickelt wird, als auch den bereits erwähnten schräg geschnittenen Endrand 3" am äußeren Ende des Materials 3 aufweist. Der durch den schräg geschnittenen Endrand 3" gebildete Winkel wird mit $\alpha_1$ und der durch den schräg geschnittenen Anfangsrand 3''' gebildete Winkel wird mit $\alpha_2$ bezeichnet, wobei gilt:

$$\alpha_1 = \alpha_2 = \arctan \frac{h}{n \cdot D_1 \cdot \pi},$$

worin:

n =    Anzahl der Umdrehungen;
h =    Gesamtbreite des folienförmigen Materials 3;
$D_1$ =    Durchmesser des Materialwickels 4.

Aufgrund dieser schräg geschnittenen End- und Anfangsränder 3", 3''' des folienförmigen Materials 3 wird gewährleistet, daß ein im wesentlichen gleichmäßiger Materialwickel 4 auf dem Dorn erzeugt wird, so daß sich beim Umrollvorgang zur Bildung des resultierenden ringförmigen Gebildes keine einseitige Verdickung dieses Gebildes ergibt.

Fig. 4 zeigt wiederum den auf dem Dorn 1 gebildeten Materialwickel 4, der aufgrund des Wickelprozesses gemäß Fig. 3 erzeugt wird.

Der gemäß Fig. 2 bzw. 4 auf dem Dorn 1 erzeugte Materialwickel 4 weist in jedem Falle einen Durchmesser $D_1$ auf.

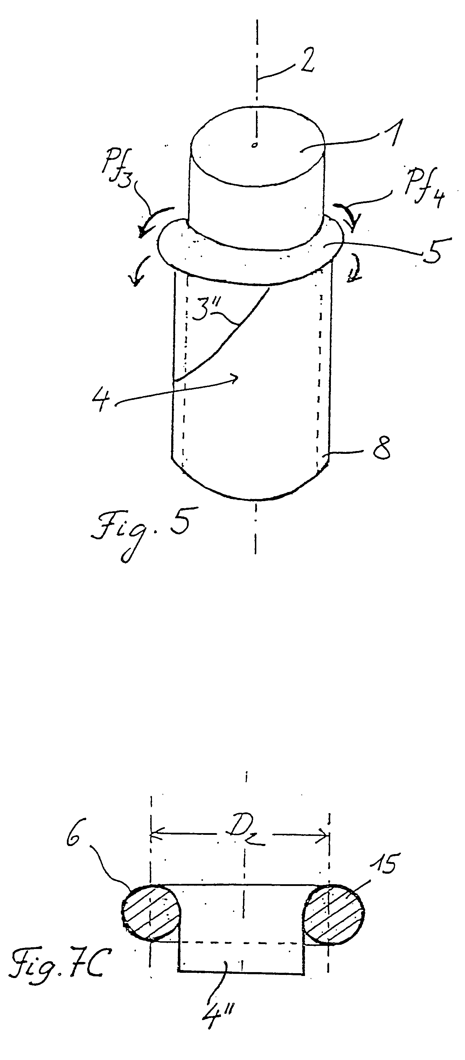

Im Anschluß an den anhand der Fig. 1 und 2 bzw. 3 und 4 erläuterten Wickelprozeß wird, wie nunmehr anhand der Fig. 5 erläutert wird, der Materialwickel 4 an einem stirnseitigen Ende des Dorns 1 beginnend (im vorliegenden Ausführungsbeispiel am oberen stirnseitigen Ende beginnend) in Richtung der Achse 2 des Dorns 1 entlang des Umfangs des Dorns durch aufeinanderfolgendes Umrollen des Materialwickels 4, wie durch die Pfeile $Pf_3$ und $Pf_4$ angedeutet ist, im wesentlichen bis zu dem entgegengesetzten stirnseitigen Ende des Dorns 1 umgerollt. Gemäß Fig. 4 ist das erste (obere) Ende des Materialwickels 4 mit 7 bezeichnet und gemäß Fig. 5 ist das zweite (untere) Ende des Materialwickels 4 mit 8 bezeichnet.

Fig. 5 zeigt ein Zwischenstadium dieses Umrollvorgangs, wobei zunächst ein vorläufiges ringförmiges Gebilde 5 auf der Oberfläche des Dorns 1 gebildet ist.

Durch weiteres aufeinanderfolgendes, kontinuierliches Umrollen und Abstreifen in Richtung zum unteren stirnseitigen Ende des Dorns 1 wird, wie nunmehr aus Fig. 6 zu ersehen ist, ein resultierendes ringförmiges Gebilde 6 aus dem umgerollten Materialwickel 4 gebildet.

Dieses ringförmige Gebilde 6 wird sodann auf dem Dorn 1 einer derartigen thermischen Behandlung mit vorgegebener Behandlungsdauer unterworfen, daß das expandierte Polytetrafluorethylen (ePTFE) über den Querschnitt des ringförmigen Gebildes 6 einen Dichtegradienten erhält, wodurch die Dichte des ePTFE von der Außenseite des ringförmigen Gebildes 6 ausgehend in Richtung zu dessen Querschnittsmittelpunkt zunimmt.

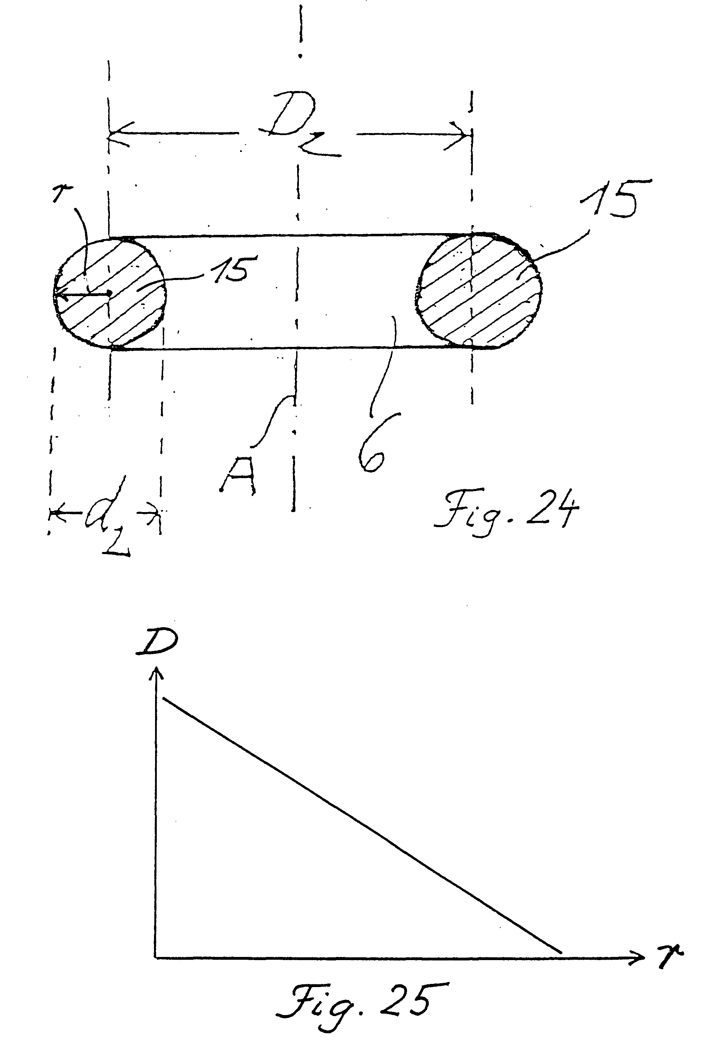

Anhand der Fig. 24 wird erläutert, daß insbesondere zur Erzielung des erwünschten Dichtegradienten über den Querschnitt 15 des ringförmigen Gebildes 6 die thermische Behandlung in der Weise erfolgt, daß die resultierende Dichte im Bereich der i.w. zylindrischen Außenseite des ringförmigen Gebildes 6 leicht höher als die Ausgangsdichte des folienförmigen Materials 3 ist und die resultierende Dichte im Bereich des Mittelpunkts des Querschnitts 15 etwa gleich der spezifischen Dichte von voll verdichtetem ePTFE ist. Insbesondere erfolgt eine thermische Behandlung zum Schrumpfen des folienförmigen Materials 3 in dem ringförmigen Gebilde 6 im Temperaturbereich von ca. 90°C bis ca. 320°C und eine anschließende thermische Behandlung zum Sintern im Temperaturbereich von ca. 327°C bis ca. 420°C. Andererseits können diese Schrumpf- und Sinterprozesse überlappend im reinen Sintertemperaturbereich durchgeführt werden. Die Behandlungsdauern bzw. Verweilzeiten hängen stark von den Querschnittsdurchmessern ab und liegen vorzugsweise im Bereich von 3 Minuten bis 40 Minuten.

Hierdurch wird beispielsweise erreicht, daß die Dichte im Bereich der Außenseite des ringförmigen Gebildes 6 ca. 0,1 $g/cm^3$ und im Bereich des Querschnittsmittelpunkts des ringförmigen Gebildes 6 maximal ca. 2,2 $g/cm^3$ beträgt.

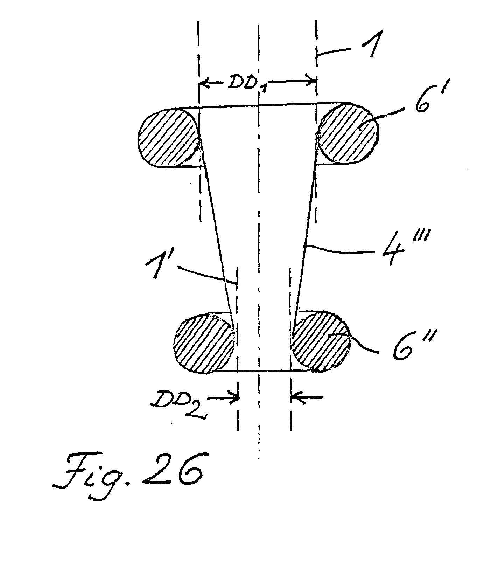

Fig. 25 zeigt eine graphische Darstellung des Dichtegradienten, wobei die Dichte D in Abhängigkeit vom Radius r des kreisförmigen Querschnitts 15 des ringförmigen Gebildes 6 dargestellt ist. Im vorliegenden Beispiel hat der Dichtegradient einen stetigen Verlauf vom Mittelpunkt des Querschnitts 15 ausgehend in Richtung zu dessen Umfang, das heißt Außenseite des ringförmigen Gebildes 6. Hierbei beträgt beispielsweise die Dichte an der Außenseite ca. 0,1 $g/cm^3$ und im Bereich des Mittelpunkts des Querschnitts 15 maximal ca. 2,2 $g/cm^3$.

Im Anschluß an die erläuterte thermische Behandlung wird das resultierende ringförmige Gebilde 6 von dem Dorn 1 abgenommen.

Fig. 7A zeigt perspektivisch eine Ansicht des fertigen, ringförmigen, mehrschichtig aufgebauten Dichtungselements 6.

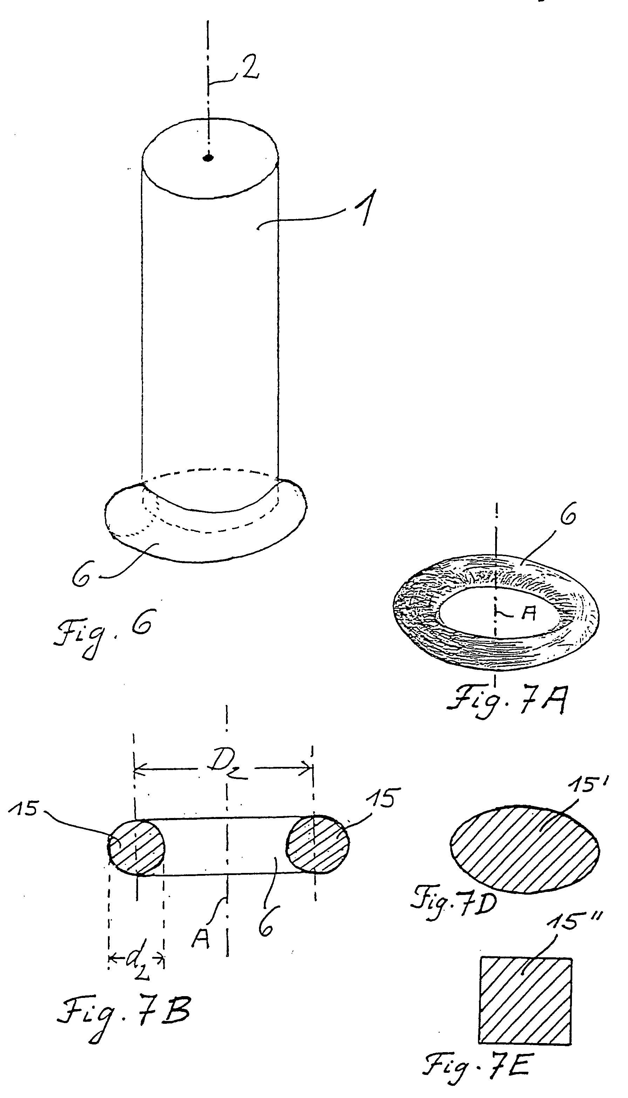

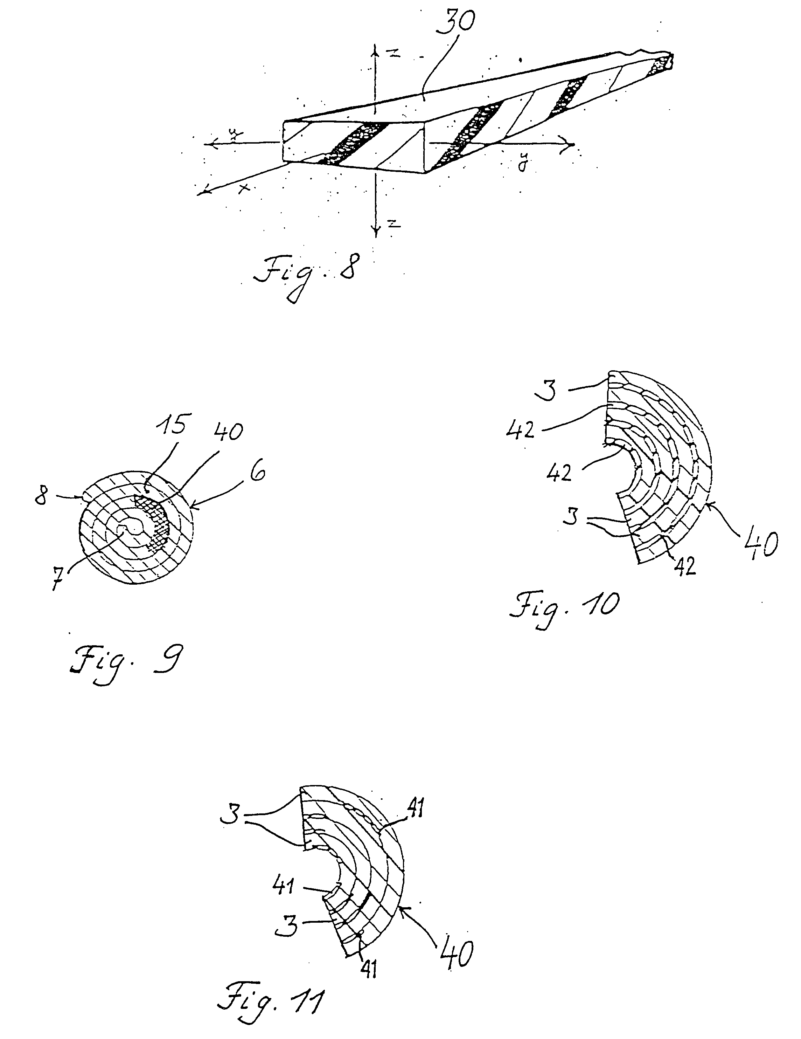

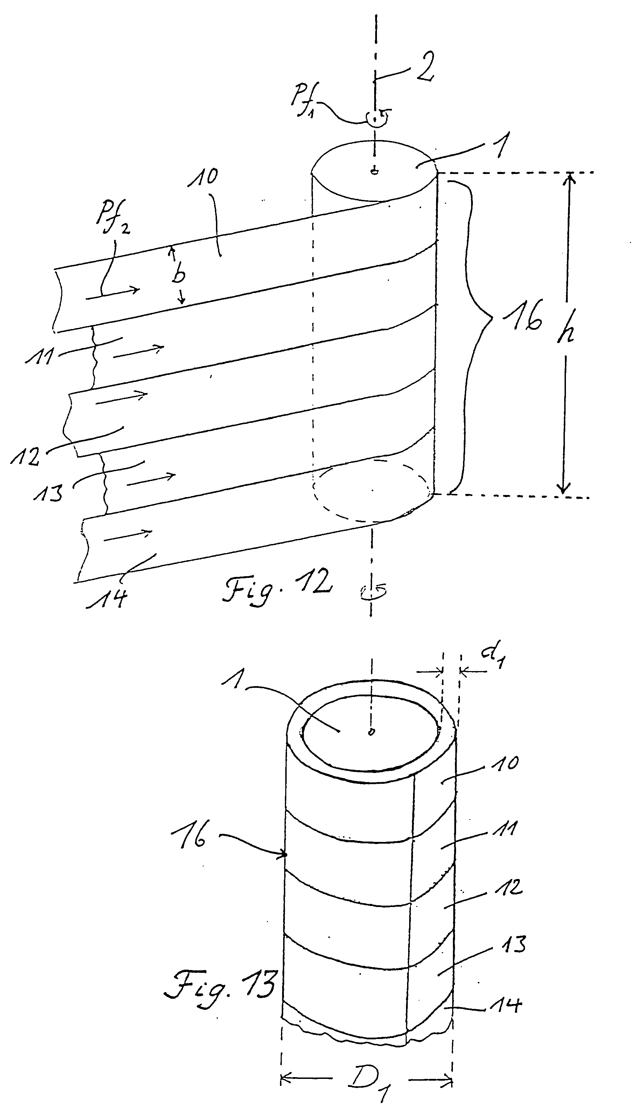

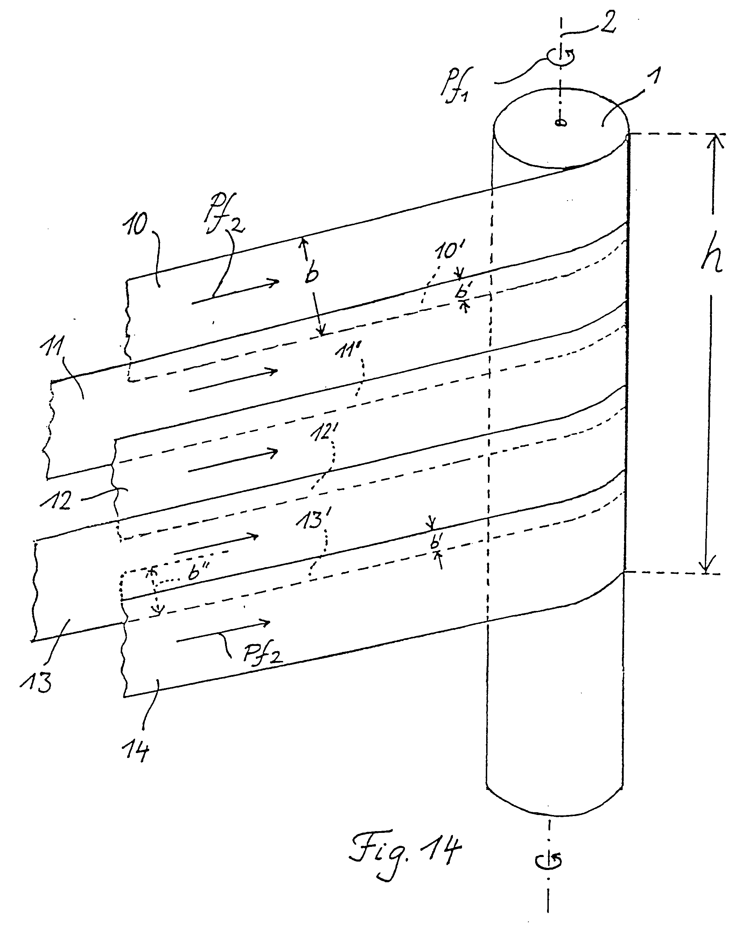

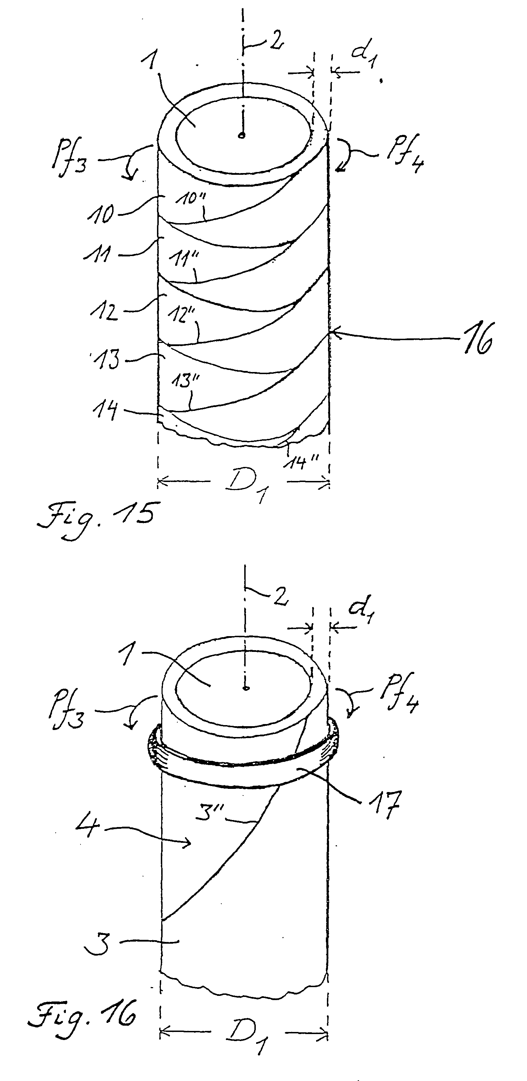

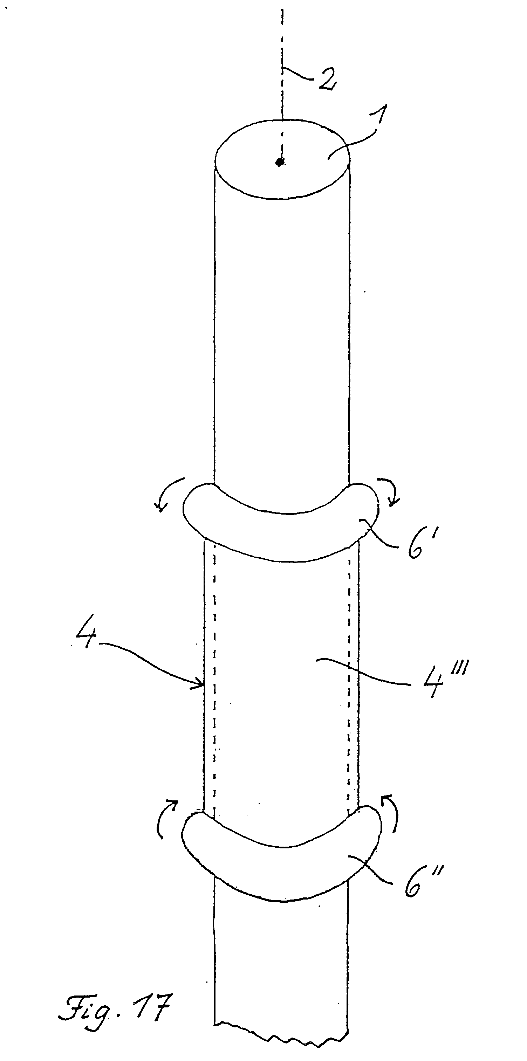

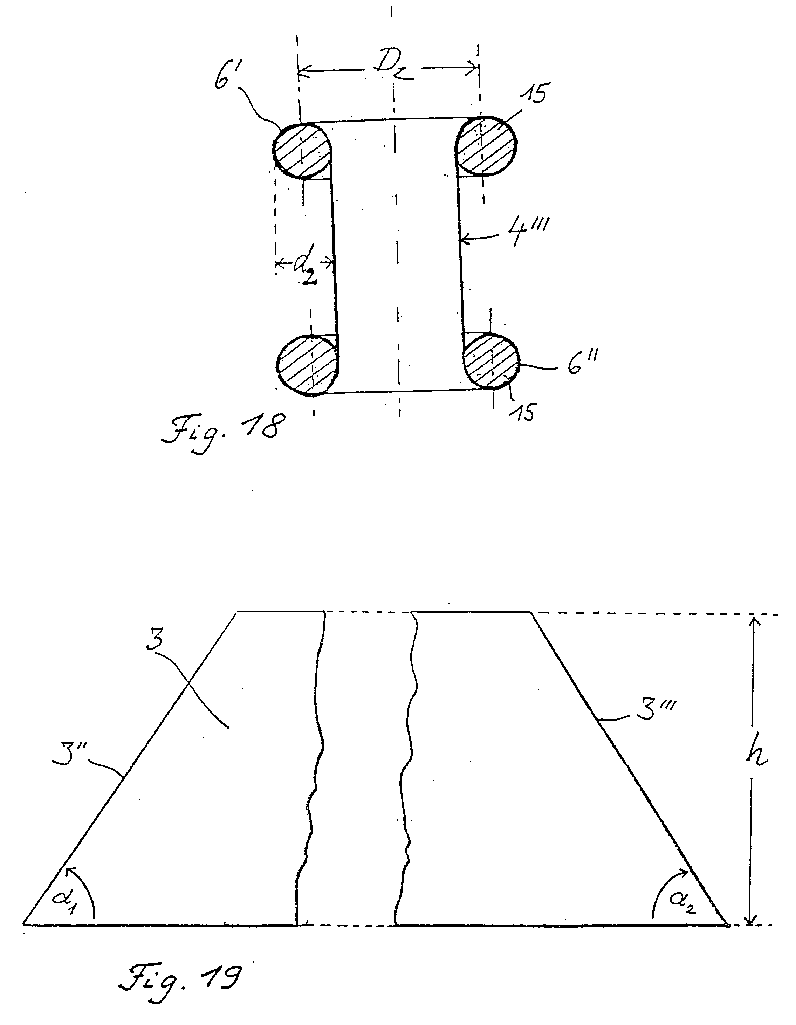

Der Durchmesser $D_2$ des resultierenden ringförmigen Gebildes 6 (vgl. Fig. 7B) ist von der Breite h des Materialwickels 4 auf dem Dorn sowie von der Wickelstärke $d_1$ abhängig (vgl. Fig. 2 bzw. 4).

In Fig. 7B ist der i.w. kreisförmige Querschnitt des resultierenden ringförmigen Gebildes 6 mit 15 bezeichnet, wobei $d_2$ den Durchmesser dieses Querschnitts 15 und damit die Dicke des resultierenden ringförmigen Gebildes 6 angibt. Die Mittelachse des ringförmigen Gebildes 6 ist mit A bezeichnet. Aus Fig. 7D ergibt sich, daß das ringförmige Gebilde 6 gemäß Fig. 7B statt eines i.w. kreisförmigen Querschnitts 15 einen i.w. ovalen Querschnitt 15' bzw. gemäß Fig. 7E einen i.w. rechteckförmigen Querschnitt 15" aufweisen kann. Ein derartiger i.w. ovaler Querschnitt 15' bzw. ein derartiger i.w. rechteckförmiger Querschnitt 15" des Gebildes 6 wird durch dessen entsprechendes Formpressen im Anschluß an die Wickel-, Umroll-, Schrumpf- und/oder Sinterprozesse erzeugt. Fig. 7C zeigt eine gegenüber der Fig. 7B insofern abgewandelte Ausführungsform eines resultierenden ringförmigen Gebildes 6, als an diesem nunmehr noch ein freier Endabschnitt 4" des ursprünglichen Materialwickels 4 gelassen ist. Ein derartiger freier Endabschnitt 4" des Materialwickels 4 kann gegebenenfalls eine weitere Dichtfunktion übernehmen.

Fig. 9 zeigt in detaillierter Ansicht den Querschnitt 15 des aus dem umgerollten Materialwickel 4 erzeugten ringförmigen Gebildes 6, wobei mit 7 das erste (innere) Ende des Materialwickels 4 und mit 8 das zweite (äußere) Ende des Materialwickels 4 bezeichnet sind. Der Materialwickel 4 besteht, wie bereits oben erläutert, aus einer Anzahl von aufeinanderliegenden Wickellagen 4', die aus dem folienförmigen Material 3 gebildet sind. Ein einzelner Abschnitt des umgerollten Materialwickels 4 ist im Querschnitt 15 gemäß Fig. 9 mit 40 bezeichnet. Fig. 10 zeigt beispielsweise eine vergrößerte Darstellung dieses isolierten Abschnitts 40, wobei zu erkennen ist, daß zwischen den einzelnen Lagen des folienförmigen Materials 3 jeweils eine kontinuierliche Schicht 42 aus einem polymeren Material eingelagert ist, so daß sich eine Art von Verbundkonstruktion ergibt. Aus Fig. 11 ist ersichtlich, daß anstelle von kontinuierlichen Schichten aus polymerem Material nunmehr einzelne isolierte Streifen 41 aus polymerem Material zwischen die einzelnen Lagen des folienförmigen Materials 3 eingebracht sind. Die Schicht 42 gemäß Fig. 10 bzw. die Streifen 41 gemäß Fig. 11 werden entweder vor dem Wickelprozeß gemäß Verfahrensschritt a) auf das folienförmige Material 3 aufgebracht oder während dessen Wickelns auf den Dorn 1 einlaufen gelassen.

Eine weitere vorteilhafte Ausgestaltung des erfindungsgemäßen Verfahrens wird anhand der Fig. 12 und 13 erläutert. Hierbei ist vorgesehen, daß mehrere folienförmige Materialbahnen 10, 11, 12, 13 und 14 mit unterschiedlichen Materialeigenschaften von einer jeweils vorgegebenen Breite b parallel nebeneinander auf einen Dorn 1 in Form eines zylindrischen Rohrabschnitts gewickelt werden, so daß ein resultierender Materialwickel 16 mit einer Wickelstärke $d_1$ und einer Breite h erzeugt wird. Hierbei können vorzugsweise diese Materialbahnen 10 bis 14 zumindest teilweise sich gegenseitig überlappend auf den Dorn 1 gewickelt werden, wie dies aus Fig. 14 ersichtlich ist. Insbesondere können diese Materialbahnen 10 bis 14 bei vorgegebener gleichbleibender Überlappungsbreite b' auf den Dorn 1 gewickelt werden, wobei der überlappte Bereich der Materialbahn 10 mit 10', der überlappte Bereich der Materialbahn 11 mit 11', der überlappte Bereich der Materialbahn 12 mit 12' und der überlappte Bereich der Materialbahn 13 mit 13' bezeichnet sind. Diese überlappten Bereiche werden so gelegt, daß der überlappte Bereich 10' der innerste überlappte Bereich und letztendlich der überlappte Bereich 13' der am äußersten liegende überlappte Bereich ist.

Die Überlappungsbreite kann variieren, beispielsweise ist zwischen den Materialbahnen 13 und 14 eine größere Überlappungsbreite b'' schematisch dargestellt.

Fig. 15 zeigt den fertigen Materialwickel 16 auf dem Dorn 1, bevor der Umrollprozeß nach Maßgabe der Pfeile $Pf_3$ und $Pf_4$ beginnt, wie bereits anhand Fig. 5 erläutert.

Aus Fig. 15 ist noch ersichtlich, daß die erste Materialbahn 10 einen schräg geschnittenen Endrand 10'', die zweite Materialbahn 11 einen schräg geschnittenen Endrand 11'', die dritte Materialbahn 12 einen schräg geschnittenen Endrand 12'' und die vierte Materialbahn 13 einen schräg geschnittenen Endrand 13'' und schließlich die fünfte Materialbahn 14 einen schräg geschnittenen Endrand 14'' aufweisen.

Beispielsweise können die folgenden verschiedenen Materialbahnen 10 - 14 auf den Dorn 1 gewickelt werden, wie oben beschrieben:

Materialbahn 10 ist eine hochfeste, biaxial orientierte ePTFE-Membran (zum Beispiel mit einer Dicke von 10 bis 20µ),

Materialbahn 11 ist eine großporige Membran,

Materialbahn 12 ist eine elektroplattierte Membrane, z.B. eine kupferbeschichtete Membrane,

Materialbahn 13 ist eine FEP-beschichtete Membrane,

Materialbahn 14 ist eine hochfeste, biaxial orientierte ePTFE-Membran (zum Beispiel mit einer Dicke von 10 bis 20µ).

Im vorliegenden Ausführungsbeispiel gemäß Fig. 12 - 15 sind insgesamt fünf Membranbahnen 10 - 14 gezeigt, jedoch besteht auch die Möglichkeit, mehr oder weniger Membranbahnen in der erläuterten Art und Weise auf den Dorn 1 zu wickeln.

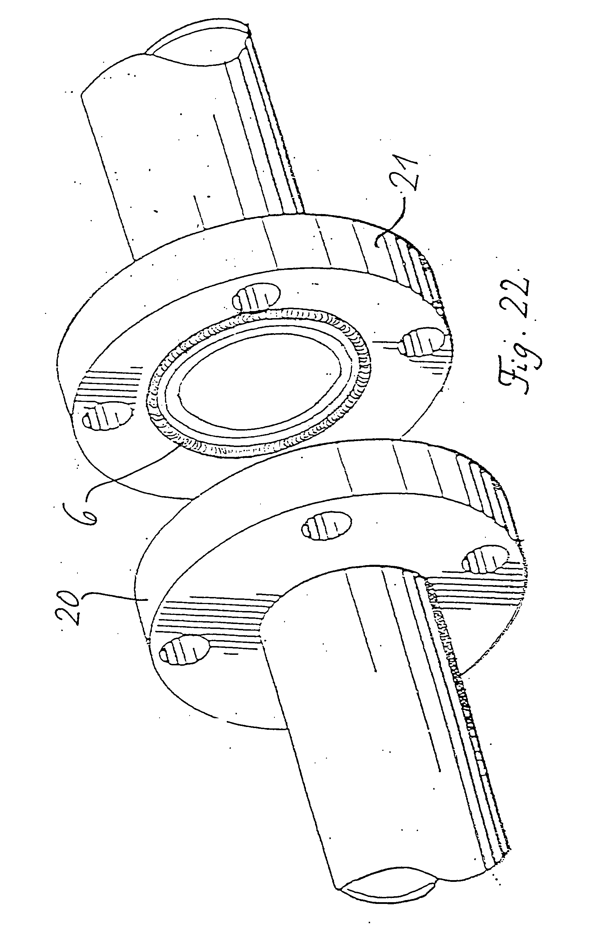

Der resultierende Materialwickel 16 wird sodann wiederum gerollt, wie oben anhand der Fig. 5 und 6 erläutert, und anschließend einer thermischen Behandlung unterzogen (Schrumpfen, Sintern), bis letztendlich wiederum ein Ring 6 gemäß Fig. 7A und Fig. 7B gebildet ist, beispielsweise ein endloser Dichtring mit einem Dichtegradienten über den Ringquerschnitt 15 zur Verwendung als Flanschdichtung, beispielsweise bei der Anordnung gemäß Fig. 22.

Im Falle der bereits oben erwähnten Verwendung mehrerer, sich überlappender Materialbahnlagen ergibt sich auch der Vorteil, daß letztendlich größere resultierende Durchmesser des Querschnitts des erzeugten Ringes erzielt werden (vgl. Durchmesser $d_2$ des Querschnitts 15 gemäß Fig. 7B).

Aus Fig. 16 ist ersichtlich, daß auf dem Materialwickel 4 ein tubusförmiges Element 17, zum Beispiel ein O-Ring angeordnet ist, der bei dem Umrollprozeß zur Bildung eines im wesentlichen·ringförmigen Gebildes 6 als Kern miteingerollt wird.

Fig. 17 zeigt ein Ausführungsbeispiel eines im wesentlichen doppelt ringförmig ausgebildeten Bauelements, das dadurch erzeugt wird, daß der Materialwickel 4 auf dem Umfang des Dorns 1 zuerst im Bereich des einen stirnseitigen Endes des Dorns beginnend in Richtung der Achse 2 des Dorns 1 entlang des Umfangs des Dorns durch einen auf den Materialwickel einwirkenden Umrollvorgang im wesentlichen bis zu einem vorgegebenen ersten Umfangsbereich des Dorns umgerollt wird, so daß im wesentlichen ein erstes ringförmiges Gebilde 6' aus dem umgerollten Materialwickel 4 erzeugt wird. Anschließend wird der Materialwickel 4 im Bereich des entgegengesetzten stirnseitigen Endes des Dorns 1 beginnend in Richtung der Achse 2 des Dorns, jedoch nunmehr in gleichsam entgegengesetzter Richtung, entlang des Umfangs des Dorns durch einen weiteren auf den Materialwickel 4 einwirkenden Umrollvorgang im wesentlichen bis zu einem vorgegebenen zweiten Umfangsbereich des Dorns gerollt, so daß im wesentlichen ein zweites ringförmiges Gebilde 6" aus dem umgerollten Material 4 erzeugt wird. Der erste vorgegebene Umfangsbereich des Dorns und der zweite vorgegebene Umfangsbereich des Dorns 1 sind in der Weise voneinander beabstandet, daß das erste ringförmige Gebilde 6' und das zweite ringförmige Gebilde 6" einen entsprechenden Abstand voneinander aufweisen und durch einen schlauchförmigen Zwischenbereich 4''' des Materialwickels 4 miteinaner verbunden bleiben.

Sodann werden das erste ringförmige Gebilde 6' und das zweite ringförmige Gebilde 6" auf dem Dorn 1 einer derartigen thermischen Behandlung mit vorgegebener Behandlungsdauer unterworfen, daß das expandierte Polytetrafluorethylen (ePTFE) über den jeweiligen Querschnitt des ersten ringförmigen Gebildes 6' bzw. des zweiten ringförmigen Gebildes 6" einen Dichtegradienten erhält, wodurch die Dichte des expandierten Polytetrafluorethylens von der Außenseite des entsprechenden ersten ringförmigen Gebildes 6' bzw. des entsprechenden zweiten ringförmigen Gebildes 6" ausgehend in Richtung zu dem jeweiligen Querschnittsmittelpunkt des Gebildes 6' bzw. 6" zunimmt.

Diese thermische Behandlung der beiden ringförmigen Gebilde 6' und 6", welche gemäß der aus Fig. 18 ersichtlichen Anordnung durch den schlauchförmigen Zwischenbereich 4''' untereinander verbunden sind, erfolgt in entsprechender Weise, wie bereits weiter oben anhand Fig. 24 unter Bezugnahme auf das ringförmige Gebilde 6 im einzelnen erläutert wurde.

Infolgedessen wird wiederum sowohl für das ringförmige Gebilde 6' als auch für das ringförmige Gebilde 6" ein Verlauf des Dichtegradienten erzeugt, wie aus der graphischen Darstellung nach Fig. 25 ersichtlich.

Fig. 20 zeigt eine gegenüber Fig. 17 insofern abgewandelte Ausführungsform, als nunmehr die beiden auf den Materialwickel 4 einwirkenden, von einander entgegengesetzten stirnseitigen Enden des Dorns 1 ausgehenden Umrollvorgänge solange erfolgen, bis das resultierende erste ringförmige Gebilde 6' und das resultierende zweite ringförmige Gebilde 6"auf dem Umfang des Dorns 1 unmittelbar einander gegenüberliegen. Die beiden resultierenden ringförmigen Gebilde 6' und 6" werden in dieser Ausgestaltung zunächst zur Erzielung eines Dichtegradienten über den jeweiligen Ringquerschnitt geschrumpft und gesintert, wie bereits weiter oben anhand der Fig. 17 erläutert, und anschließend von dem Dorn 1 abgenommen, wobei eine Axialschnittansicht dieses doppelt ringförmig ausgebildeten Bauelements aus Fig. 21 ersichtlich ist. Die beiden ringförmigen Gebilde 6' und 6" sind innen noch durch ein kleines Stück des Materialwickels 4 untereinander verbunden.

Fig. 26 zeigt in Axialschnittansicht ein weiteres Ausführungsbeispiel eines im wesentlichen doppelt ringförmig ausgebildeten Dichtungselements, welches insgesamt eine im wesentlichen konische Ausgestaltung aufweist. Dieses doppelt ringförmige Dichtungselement wird in der Weise hergestellt, daß zunächst ein doppelt ringförmig ausgebildetes Dichtungselement erzeugt wird, wie dies weiter oben bereits anhand Fig. 17 und 18 erläutert ist. Fig. 18 zeigt in Axialschnittansicht ein doppelt ringförmig ausgebildetes Dichtungselement in einer im wesentlichen zylindrischen Ausgestaltung. Um zur konischen Ausgestaltung nach Fig. 26 zu gelangen, wird die folgende Methode angewandt:

Das erste ringförmige Gebilde 6' verbleibt auf dem Dorn 1 mit dem Durchmesser $DD_1$, während das zweite ringförmige Gebilde 6" von dem Dorn 1 abgenommen und auf einen zweiten Dorn 1' übertragen wird, welcher gegenüber dem ursprünglichen Dorn 1 einen kleineren Durchmesser $DD_2$ aufweist. Das erste ringförmige Gebilde 6' und das zweite ringförmige Gebilde 6" weisen hierbei nach wie vor, wie im Falle der Fig. 18, einen entsprechenden Abstand voneinander auf und verbleiben durch das schlauchförmige Zwischenstück 4''' miteinander verbunden. In Fig. 26 sind der ursprüngliche Dorn 1 sowie der zweite Dorn 1' kleineren Durchmessers gestrichelt gezeichnet, weil Fig. 26 das resultierende, doppelt ringförmig ausgebildete Dichtungselement zeigt, das bereits von den jeweiligen Dornen 1 bzw. 1' abgenommen ist.

Zunächst wird aber die wie oben erläuterte Anordnung, gemäß welcher das erste ringförmige Gebilde 6' sich auf dem Dorn 1 und das zweite ringförmige Gebilde 6" sich auf dem zweiten Dorn 1' befinden, einer thermischen Behandlung mit vorgegebener bzw. wählbarer Behandlungsdauer unterworfen, mit dem Ziel, dem expandierten Polytetrafluorethylen (ePTFE) über den jeweiligen Querschnitt des ersten ringförmigen Gebildes 6' bzw. des zweiten ringförmigen Gebildes 6" einen Dichtegradienten zu verleihen, wodurch die Dichte des ePTFE von der Außenseite des entsprechenden ersten ringförmigen Gebildes 6' bzw. des entsprechenden zweiten ringförmigen Gebildes 6" ausgehend in Richtung zu dem jeweiligen Querschnittsmittelpunkt des Gebildes 6' bzw. 6" zunimmt. Gleichzeitig ist dafür Sorge getragen, daß das Verhältnis des Durchmessers $DD_1$ des ursprünglichen Dornes 1 zu dem Durchmesser $DD_2$ des zweiten Dornes 1' so eingestellt ist, daß das folienförmige Material in dem ringförmigen Gebilde 6" so schrumpft, daß das letztere als Innendurchmesser den Durchmesser $DD_2$ des zweiten Dornes 1' erhält, während das ringförmige Gebilde 6' als Innendurchmesser den Durchmesser $DD_1$ des ersten, ursprünglichen Dornes 1 beibehält. Durch diese Maßnahme wird die im wesentlichen konische Gesamtausgestaltung des resultierenden, doppelt ringförmig ausgebildeten Dichtungselements gemäß Fig. 26 erzielt. Diese Konizität wird praktisch durch den schlauchförmigen Zwischenbereich 4''' deutlich, welcher im Zuge der thermischen Behandlung zumindest ebenfalls gesintert worden ist.

Insbesondere ist bei der Anordnung nach Fig. 26 noch vorgesehen, daß das Verhältnis des Durchmessers $DD_1$ des ursprünglichen Dornes 1 dem Durchmesser $DD_2$ des zweiten Dornes 1' in Abhängigkeit vom Reckverhältnis des in den Gebilden 6' und 6'' enthaltenen folienförmigen Materials 3 in der Umfangsrichtung (vgl. obige Erläuterung anhand der Fig. 1 und 2) bei ca. 1,7 : 1 liegt, so daß ein Schrumpf des entsprechenden folienförmigen Materials von maximal 70% erzielt wird. Die thermische Behandlung der Anordnung nach Fig. 26 erfolgt vorzugsweise in einem (nicht dargestellten) Konvektionsofen, der auf ca. 420°C (entsprechend 385°C in der Mitte des Konvektionsofens) vorgeheizt wird, wobei die Behandlungsdauer bzw. Verweilzeit der Anordnung nach Fig. 26 in dem Konvektionsofen bei der gegebenen Temperatur von 385°C im Hinblick auf das erwünschte Schrumpf- und Sinterergebnis auf ca. 30 Minuten eingestellt wird. Infolgedessen wird über den jeweiligen Ringquerschnitt des ersten ringförmigen Gebildes 6' bzw. des zweiten ringförmigen Gebildes 6'' der Anordnung nach Fig. 26 der erwünschte Dichtegradient erzielt, gemäß dem die Dichte des ePTFE im Bereich der Außenseite des jeweiligen ringförmigen Gebildes 6' bzw. 6'' ca. 0,1 $g/cm^3$ und im Bereich des Querschnittsmittelpunkts des jeweiligen ringförmigen Gebildes 6' bzw. 6'' maximal ca. 2,2 $g/cm^3$ beträgt.

Die im vorangehenden erläuterten Vorteile des erfindungsgemäßen Dichtungselements können allgemein in Kraft-Nebenschluß-Verbindungen zum Zuge kommen, z.B. in genuteten Flanschen. So ist z.B. aus Fig. 22 ersichtlich, daß ein im wesentlichen ringförmig ausgebildetes Dichtungselement 6, insbesondere eine Schnurdichtung, die aus wenigstens einem helixförmig parallel zur Ringachse A gerollten Material unter Anwendung des erfmdungsgemäßen Verfahrens hergestellt ist, als Flanschdichtung zwischen zwei Flanschen 20 und 21 verwendet wird. Da es sich bei diesem erfindungsgemäßen Dichtungselement bzw. dieser erfmdungsgemäßen Schnurdichtung um ein in sich geschlossenes Bauelement handelt, ist eine Schließstelle durch Überlappung von Teilen dieser Schnurdichtung nicht mehr erforderlich, was natürlich für die praktische Anwendung außerordentlich vorteilhaft ist.

Als weitere Verwendungsmöglichkeiten für die erfindungsgemäßen Dichtungsringe sind insbesondere noch die folgenden zu erwähnen:

In Destillationskolonnen kann ein solcher Dichtungsring als Randabdichtung zwischen den Packungen der Destillationskolonne und der Destillationskolonnenwand dienen.

Ferner läßt sich der erfindungsgemäße Dichtungsring in Kraft-Hauptschluß-Verbindungen, z.B. zum Abdichten von Tank- und Behälterdeckeln, verwenden.

Beispiel für die Herstellung von geschlossenen Ringen aus ePTFE

Eine kontinuierliche biaxial expandierte PTFE-Membrane wurde gemäß GORE US-Patenten 3,933,566 und 4,187,390 hergestellt. Fünf Streifen wurden in Querrichtung aus der Membrane herausgeschnitten, um die Querzugsfestigkeit der Membrane zu messen. Folgende Werte stellen Mittelwerte aus den fünf Mustern dar.

| Länge | 16,7 cm |
|---|---|
| Breite | 2,7 cm |
| Dicke | 38 μm |
| Gewicht | 0,0841 g |
| Bruchkraft | 21,523 N |

Die folgenden Werte wurden berechnet:

| spezifische Dichte | 0,49 $g/cm^3$ |
|---|---|
| Querschnittsfläche | 0,0103 $cm^2$ |
| Zugfestigkeit | 20,5 MPa |

Die berechnete Matrixzugfestigkeit in Querrichtung der ePTFE-Membrane war 90 MPA.

Um die Matrixzugfestigkeit einer porösen Struktur zu berechnen, wird die Bruchkraft des Musters durch die Querschnittsfläche desselben geteilt und dann dieses Ergebnis mit dem Verhältnis der spezifischen Dichte des vollverdichteten Polymers und der spezifischen Dichte des porösen Polymers multipliziert. Die spezifische Dichte von vollverdichtetem PTFE wurde mit 2,15 $g/cm^3$ angenommen.

Diese ePTFE Membrane wurde manuell um einen Aluminium Wickeldorn mit einem Durchmesser von 530 mm gewickelt. Dabei wurden Wickelzahlen von 116 horizontal gewählt bei einer Membranbreite von 300 mm. Dies resultiert in einer vertikalen Wickelzahl von ca. 4 Umdrehungen. Die Schnittkante wurde mit ca. $\alpha \approx 20°$ (siehe Figur 19) ausgeführt.

Die zwei resultierenden Ringen wurden auf dem Dorn in einem Konvektionsofen bei 385°C für 30 Minuten geschrumpft/gesintert, um einen Dichtegradienten über den jeweiligen Ringquerschnitt zu erzielen, wie oben erläutert. Ein weiterer Ring wurde nach dem gleichen Verfahren gewickelt und bei 385°C und nur 18 Minuten geschrumpft/ gesintert.

Die Dichten wurden über das "archimedische Prinzip" gemessen, d. h. ein Körper wird in einer Flüssigkeit bekannter Dichte (hier dest. Wasser) versenkt und das Gewicht des verdrängten Wasser gemessen. Es wird das Gewicht des Körpers in Luft und in der Flüssigkeit ermittelt und nach folgender Formel die Dichte $\varphi$ des Körpers berechnet:

$$\varphi = \frac{W(a) \cdot [\varphi_{fl} - 0{,}0012 \text{ g/cm}^3]}{0{,}99983 \cdot G}$$

wobei

| | |
|---|---|
| W(a): | Gewicht des Körpers in Luft |
| G: | W(a) - W(fl) Differenz Gewicht des Körper in Luft und in der Flüssigkeit |
| 0,99983: | Korrekturfaktor für Gestänge der Meßvorrichtung |
| 0,0012g/cm³: | Korrekturfaktor Luftdruck |
| $\varphi_{fl}$: | Dichte der Flüssigkeit |

Die Messung wurde mit einer Analysenwaage "Sartorius isoCall AC211S" durchgeführt. Dichtewerte (g/cm³) wurden in radialen Schichten von ca. 1,4-1,5 mm Stärke von der Außenseite bis zum Kern der Dichtung gemessen, wobei der vollverdichtete Kern bei Ring Beispiel 1 und 2 einen Durchmesser von ca. 4-5 mm aufweist. Für die integrale Dichte wurden kreisförmige Querschnittsscheiben mit ca. 2 mm Höhe vermessen. Bei Ring Beispiel 3 wurde kein vollverdichteter Kern erreicht:

| Ring | Di (mm) | Dq (mm) | Dichte Membrane | Dichte integral | Dichte innen | Dichte außen | Temp/ Zeit |
|---|---|---|---|---|---|---|---|
| 1. | 530 | 24,4 | 0,21 | 1,726 | 2,163 | 1,207 | 385°C/ 30min. |
| 2. | 530 | 24,8 | 0,20 | 1,711 | 2,159 | 1,152 | 385°C/ 30 min. |
| 3. | 530 | 25,2 | 0,20 | 1,521 | 1,973 | 0,931 | 385°/ 18 min |

Zugehörige Einzeldichten:

| radiale Tiefe (mm) | 1. Ring | 2. Ring | 3. Ring |
|---|---|---|---|
| 1,5 | 1,207 | 1,151 | 0,931 |
| 3 | 1,362 | 1,268 | 1,124 |
| 4,5 | 1,484 | 1,408 | 1,211 |
| 6 | 1,567 | 1,581 | 1,391 |
| 7,5 | 1,655 | 1,660 | 1,478 |
| 9 | 1,730 | 1,700 | 1,614 |
| 10,5 | 1,785 | 1,774 | 1,811 |
| 10,5 - 12,5 | 2,162 | 2,159 | 1,973 |

Bezugszeichenliste

| | |
|---|---|
| 1 = | erster Dorn |
| 1' = | zweiter Dorn |
| 2 = | Rotationsachse |
| 3 = | folienförmiges Material |
| 3' = | gerader äußerer Rand des Materials 3 |
| 3" = | schräg geschnittener Endrand des Materials 3 |
| 3''' = | schräg geschnittener Anfangsrand des Materials 3 |
| 4 = | Materialwickel |
| 4' = | aufeinanderliegende Wickellagen des Materialwickels 4 |
| 4" = | freier Endabschnitt des Materialwickels 4 |
| 4''' = | schlauchförmiger Zwischenbereich des Materialwickels 4 |
| 5 = | vorläufiges ringförmiges Gebilde |
| 6 = | resultierendes ringförmiges Gebilde |
| 6' = | erstes endseitiges ringförmiges Gebilde |
| 6" = | zweites endseitiges ringförmiges Gebilde |
| 7 = | erstes Ende des Materialwickels 4 |
| 8 = | zweites Ende des Materialwickels 4 |
| 9 = | |
| 10 = | erste Materialbahn |
| 10' = | überlappter Bereich der ersten Materialbahn 10 |
| 10" = | schräg geschnittener Endrand der Materialbahn 10 |
| 11 = | zweite Materialbahn |
| 11' = | überlappter Bereich der zweiten Materialbahn |
| 11" = | schräg geschnittener Endrand der zweiten Materialbahn |
| 12 = | dritte Materialbahn |
| 12' = | überlappter Bereich der dritten Materialbahn |
| 12" = | schräg geschnittener Endrand der dritten Materialbahn |
| 13 = | vierte Materialbahn |
| 13' = | überlappter Bereich der vierten Materialbahn |
| 13" = | schräg geschnittener Endrand der Materialbahn 13 |
| 14 = | fünfte Materialbahn |
| 15 = | kreisförmiger Querschnitt des ringförmigen Gebildes 6 bzw. 6' bzw. 6" |
| 15' = | ovaler Querschnitt |
| 15" = | rechteckförmiger Querschnitt |
| 16 = | Materialwickel |
| 17 = | tubusförmiges Element |
| 18 = | |
| 19 = | |
| 20 = | erster Flansch |
| 21 = | zweiter Flansch |
| 22 = | Dichtungsschnur |
| 30 = | Dichtungselement |
| 40 = | Abschnitt des umgerollten Materialwickels 4 |
| 41 = | Streifen aus polymerem Material |
| 42 = | kontinuierliche Schicht aus polymerem Material |
| $Pf_1$ = | Rotationsrichtung |
| $Pf_2$ = | Wickelrichtung |
| $Pf_3$ = | Umrollrichtung |
| $Pf_4$ = | Umrollrichtung |
| h = | Gesamtbreite des folienförmigen Materials 3 |
| $d_1$ = | Wickelstärke des Materialwickels 4 |
| $d_2$ = | Dicke des resultierenden ringförmigen Gebildes 6 bzw. 6' bzw. 6" |
| $D_1$ = | Durchmesser des Materialwickels 4 |
| $D_2$ = | Durchmesser des resultierenden ringförmigen Gebildes 6 bzw. 6' bzw. 6" |

b = Breite einer Materiaibahn
b' = Überlappungsbreite
$DD_1$ = Durchmesser des ersten Dornes 1
$DD_2$ = Durchmesser des zweiten Dornes 1'
D = Dichte
r = Radius

**Patentansprüche**

1. In sich geschlossenes, schnurförmig ausgebildetes Dichtungselement aus wenigstens einem spiralig gerollten folienförmigen Material (3) aus expandiertem Polytetrafluorethylen (ePTFE), wobei das Dichtungselement über seinen Schnurquerschnitt (15) einen Dichtegradienten aufweist, der von der Außenseite des Dichtungselements ausgehend in Richtung zu dessen Querschnittsmittelpunkt zunimmt (Fig. 25).

2. Dichtungselement nach Anspruch 1, **dadurch gekennzeichnet, daß** es wenigstens ein ringförmiges Gebilde (6) darstellt.

3. Dichtungselement nach Anspruch 2, **dadurch gekennzeichnet, daß** das ringförmige Gebilde (6) einen im wesentlichen kreisförmigen Querschnitt aufweist.

4. Dichtungselement nach Anspruch 3, **dadurch gekennzeichnet, daß** ein zweites ringförmig ausgebildetes Gebilde (6'') vorgesehen ist, das mit dem ersten ringförmig ausgebildeten Gebilde (6') durch einen schlauchförmigen Zwischenbereich (4''') aus demselben folienförmigen Material (3) verbunden ist.

5. Dichtungselement nach Anspruch 4, **dadurch gekennzeichnet, daß** die beiden ringförmigen Gebilde (6', 6'') in einem vorgegebenen Abstand voneinander angeordnet sind und der schlauchförmige Zwischenbereich (4''') zusätzlich mit einem Beschichtungsmaterial, insbesondere einem Verstärkungsmaterial laminiert ist.

6. Dichtungselement nach Anspruch 4, **dadurch gekennzeichnet, daß** die beiden ringförmig ausgebildeten Gebilde (6', 6'') unmittelbar aneinander angrenzen.

7. Dichtungselement nach einem oder mehreren der vorangehenden Ansprüche, **dadurch gekennzeichnet, daß** das expandierte Polytetrafluorethylen biaxial gereckt ist.

8. Dichtungselement nach einem oder mehreren der vorangehenden Ansprüche, **dadurch gekennzeichnet, daß** es mehrere folienförmige Materialien (10-14) mit unterschiedlichen Eigenschaften aufweist.

9. Dichtungselement nach Anspruch 8, **dadurch gekennzeichnet, daß** es eine asymmetrische Verteilung der Materialeigenschaften über die Dicke ($d_2$) des ringförmigen Gebildes (6) bzw. der beiden ringförmigen Gebilde (6', 6'') aufweist.

10. Dichtungselement nach einem oder mehreren der vorangehenden Ansprüche, **dadurch gekennzeichnet, daß** es wenigstens ein beschichtetes folienförmiges Material (3) aufweist.

11. Dichtungselement nach Anspruch 10, **dadurch gekennzeichnet, daß** es ein mit einem Fluorethylenpropylen (FEP) beschichtetes folienförmiges Material (3) aufweist.

12. Dichtungselement nach Anspruch 11, **dadurch gekennzeichnet, daß** es ein mit einem Perfluoralkoxy (PFA) beschichtetes folienförmiges Material (3) aufweist.

13. Dichtungselement nach einem oder mehreren der vorangehenden Ansprüche, **dadurch gekennzeichnet, daß** es ein mit einem Elastomeren gefülltes oder imprägniertes folienförmiges Material (3) aufweist.

14. Dichtungselement nach einem oder mehreren der vorangehenden Ansprüche, **dadurch gekennzeichnet, daß** die Dichte im Bereich der Außenseite des Elements (6, 6', 6'') ca. 0,1 $g/cm^3$ und im Bereich des Querschnittsmittelpunkts des Elements (6, 6', 6'') maximal ca. 2,2 $g/cm^3$ beträgt, was einerseits etwa der Dichte des folienförmigen Ausgangsmaterials und andererseits etwa der Dichte des Vollmaterials entspricht.

15. Verfahren zur Herstellung eines in sich geschlossenen, schnurförmig ausgebildeten, mehrschichtig aufgebauten Dichtungselements, insbesondere Flanschdichtungselements, mit folgenden Verfahrensschritten:

a) wenigstens ein folienförmiges Material (3) aus expandiertem Polytetrafluorethylen (ePTFE) mit zunächst gleichförmiger Dichteverteilung und mit vorgegebener Breite wird solange auf einen langgestreckten Dorn in dessen Umfangsrichtung ($Pf_2$) gewickelt, bis eine erwünschte Wickelstärke ($d_1$) eines resultierenden Materialwickels (4) auf dem Umfang des Dorns (1) erreicht ist;

b) der Materialwickel (4) wird im Bereich des einen stirnseitigen Endes des Dorns (1) beginnend in Richtung der Achse (2) des Dorns (1) entlang des Umfangs des Dorns durch einen auf den Materialwickel (4) einwirkenden Umrollvorgang im wesentlichen bis zu dem Bereich des entgegengesetzten stirnseitigen Endes des Dorns (1) umgerollt, so daß im wesentlichen ein ringförmiges Gebilde (6) aus dem umgerollten Materialwickel (4) erzeugt wird;

c) das ringförmige Gebilde (6) wird sodann auf einem Dorn einer thermischen Behandlung unterworfen, wobei es derart schrumpft, daß es über den Querschnitt des ringförmigen Gebildes (6) einen Dichtegradienten erhält, wodurch die Dichte des expandierten Polytetrafluorethylens (ePTFE) von der Außenseite des ringförmigen Gebildes (6) ausgehend in Richtung zu dessen Querschnittsmittelpunkt zunimmt.

16. Verfahren nach Anspruch 15, **dadurch gekennzeichnet, daß** der Dorn (1), auf dem die thermische Behandlung stattfindet, der gleiche Dorn ist, auf dem der Materialwickel (4) erzeugt wird oder aber ein Dorn mit gleichem Durchmesser ist.

17. Verfahren nach Anspruch 15, **dadurch gekennzeichnet, daß** der Dorn, auf dem die thermische Behandlung stattfindet, einen kleineren Durchmesser aufweist, als der Dorn (1), auf dem der Materialwickel (4) erzeugt wird.

18. Verfahren nach Anspruch 15, **dadurch gekennzeichnet, daß** im Verfahrensschritt b) der Materialwickel (4) nur bis zu einem vorgegebenen ersten Umfangsbereich des Dorns (1) umgerollt wird und daß der Materialwickel (4) dann im Bereich des entgegengesetzten stirnseitigen Endes des Dorns (1) beginnend in Richtung der Achse (2) des Dorns (1), jedoch in entgegengesetzter Richtung, entlang des Umfangs des Dornes (1) durch einen auf den Materialwickel (4) einwirkenden zweiten Umrollvorgang im wesentlichen bis zu einem vorgegebenen zweiten Umfangsbereich des Dorns umgerollt wird, so daß aus dem umgerollten Materialwickel (4) ein zweites ringförmiges Gebilde (6") erzeugt wird, worauf sich eine thermische Behandlung gemäß Verfahrensschritt c) anschließt.

19. Verfahren nach einem der Ansprüche 16 bis 18, **dadurch gekennzeichnet, daß** ein biaxial gerecktes Polytetrafluorethylen (ePTFE) verwendet wird.

20. Verfahren nach einem oder mehreren der Ansprüche 15 bis 19, **dadurch gekennzeichnet, daß** die thermische Behandlung in der Weise erfolgt, daß die resultierende Dichte im Bereich der Außenseite des ringförmigen Gebildes (6, 6', 6") leicht höher als die Ausgangsdichte des folienförmigen Materials (3) ist und die resultierende Dichte im Bereich des Querschnittsmittelpunkts des ringförmigen Gebildes (6, 6', 6") maximal gleich der spezifischen Dichte von PTFE-Vollmaterial ist.

21. Verfahren nach Anspruch 20, **dadurch gekennzeichnet, daß** die thermische Behandlung in der Weise erfolgt, daß die Dichte im Bereich der Außenseite des ringförmigen Gebildes (6, 6', 6") ca. 0,1 $g/cm^3$ und im Bereich des Querschnittsmittelpunkts des ringförmigen Gebildes (6, 6', 6") maximal ca. 2,2 $g/cm^3$ beträgt.

22. Verfahren nach einem oder mehreren der Ansprüche 15 bis 21, **dadurch gekennzeichnet, daß** die thermische Behandlung in der Weise erfolgt, daß das ringförmige Gebilde (6, 6', 6") nach dem Schrumpfen gesintert wird.

23. Verfahren nach einem oder mehreren der Ansprüche 15 bis 22, **dadurch gekennzeichnet, daß** die Dauer der thermischen Behandlung in Abhängigkeit vom Querschnittsdurchmesser des ringförmigen Gebildes (6, 6', 6") im Bereich von 1 Minute bis 2 Stunden, vorzugsweise im Bereich von 3 Minuten bis 40 Minuten gewählt wird.

24. Verfahren nach Anspruch 17, **dadurch gekennzeichnet, daß** der Durchmesser des kleineren Dorns so gewählt wird, daß das Folienmaterial (3) des ringförmigen Gebildes (6) so schrumpft, daß das ringförmige Gebilde (6) als Innendurchmesser den Durchmesser des zweiten Dorns erhält.

**25.** Verfahren nach Anspruch 18, **dadurch gekennzeichnet, daß** der vorgegebene erste Umfangsbereich des Dorns (1) und der vorgegebene zweite Umfangsbereich des Dorns (1) in der Weise voneinander beabstandet vorgesehen werden, daß das erste im wesentlichen ringförmige Gebilde (6') und das zweite im wesentlichen ringförmige Gebilde (6") einen entsprechenden Abstand voneinander aufweisen, durch einen schlauchförmigen Zwischenbereich (4"') des Materialwickels (4) miteinander verbunden bleiben und in dieser Ausgestaltung im Anschluß an die thermische Behandlung von dem Dorn (1) abgenommen werden, wobei vorzugsweise der schlauchförmige Zwischenbereich (4"') des Materialwickels (4) vor der thermischen Behandlung zusätzlich mit einem Beschichtungsmaterial, insbesondere Verstärkungsmaterial, laminiert und sodann gemeinsam mit dem aufgebrachten Beschichtungsmaterial wärmebehandelt, insbesondere gesintert wird.

**26.** Verfahren nach Anspruch 18, **dadurch gekennzeichnet, daß** die beiden auf den Materialwickel (4) einwirkenden, voneinander entgegengesetzten stirnseitigen Enden des Dornes (1) ausgehenden Umrollvorgänge solange erfolgen, bis das resultierende erste ringförmige Gebilde (6') und das resultierende zweite ringförmige Gebilde (6") auf dem Umfang des Dorns (1) unmittelbar einander gegenüberliegen, wobei die beiden resultierenden ringförmigen Gebilde (6', 6") in dieser Ausgestaltung im Anschluß an die thermische Behandlung von dem Dorn (1) abgenommen werden.

**27.** Verfahren nach einem der Ansprüche 25 oder 26, **dadurch gekennzeichnet, daß** die beiden auf den Materialwickel (4) einwirkenden Umrollvorgänge in der Weise erfolgen, daß unterschiedliche Dicken ($d_2$) der beiden resultierenden im wesentlichen ringförmigen Gebilde (6', 6") erzeugt werden.

**28.** Verfahren nach einem oder mehreren der Ansprüche 25 bis 27, **dadurch gekennzeichnet, daß** einer der beiden durch den schlauchförmigen Zwischenbereich (4"') des Materialwickels miteinander zusammenhängenden Gebildes (6', 6") auf einen zweiten Dorn kleineren Durchmessers übertragen wird und dessen Durchmesser so gewählt wird, daß nach dem Schrumpfen des ringförmigen Gebildes (6', 6") im Laufe der thermischen Behandlung dieses als Innendurchmesser den Durchmesser des zweiten Dornes erhält, wodurch ein im wesentlichen doppelt ringförmig ausgebildetes Dichtungselement in konischer Ausgestaltung erzeugt wird.

**29.** Verfahren nach einem oder mehreren der Ansprüche 15 bis 28, **dadurch gekennzeichnet, daß** der Dorn (1) geheizt wird, bis eine der Sintertemperatur des ePTFE entsprechende Temperatur erreicht wird, um hierdurch beim Wickelprozeß auf den Dorn (1) das folienförmige Material (3) gleichzeitig zu sintern, insbesondere vorzusintern, wobei der Dorn vorzugsweise auf eine Temperatur im Bereich zwischen ca. 327°C bis ca. 420°C geheizt wird.

**30.** Verfahren nach einem oder mehreren der Ansprüche 15 bis 29, **dadurch gekennzeichnet, daß** die Wärme bei der thermischen Behandlung durch Konvektion und/oder Strahlung zugeführt wird.

**31.** Verfahren nach Anspruch 15, **dadurch gekennzeichnet, daß** beim Verfahrensschritt a) mehrere folienförmige Materialbahnen (10-14), insbesondere Materialbahnen mit unterschiedlichen Eigenschaften, von jeweils vorgegebener Breite in Richtung der Achse des Dornes (1) aufeinanderfolgend auf den Dorn gewickelt werden, wobei sich die Materialbahnen (10-14) zumindest teilweise gegenseitig überlappen und bei vorgegebener gleichbleibender oder unterschiedlicher Überlappungsbreite auf den Dorn (1) so gewickelt werden, daß sich beim anschließenden Umrollvorgang gemäß Verfahrensschritt b) eine asymmetrische Verteilung der Materialeigenschaften über die Dicke ($d_2$) des resultierenden ringförmigen Gebildes (6, 6', 6") ergibt.

**32.** Verfahren nach einem oder mehreren der Ansprüche 15 bis 31, **dadurch gekennzeichnet, daß** das gemäß Verfahrensschritt a) nach Anspruch 15 auf den Dorn (1) zu wickelnde folienförmige Material (3) mit einem schräg geschnittenen Anfangsrand (3"') sowie mit einem schräg geschnittenen Endrand (3") versehen wird, um im Zuge des Wickelprozesses jeweils schraubenlinienförmig verlaufende Anfangs- und Endbereiche des resultierenden Materialwickels (4) auf dem Dorn (1) zu erzeugen.

**33.** Verfahren nach einem oder mehreren der Ansprüche 15 bis 32, **dadurch gekennzeichnet, daß** als Dorn (1) ein im wesentlichen zylindrischer Körper, insbesondere Rohrabschnitt, verwendet wird.

**34.** Verfahren nach einem oder mehreren der Ansprüche 15 bis 33, **dadurch gekennzeichnet, daß** das ringförmig bzw. doppelt ringförmig ausgebildete Gebilde (6, 6', 6") nach dem Schrumpfen bzw. Sintern einem erneuten Recken unterworfen wird.

**Claims**

1.  Continuous sealing element, which is of cord-like design and comprises at least one spirally rolled, film-like material (3) made of expanded polytetrafluoroethylene (ePTFE), the sealing element over its cord cross-section (15) having a density gradient which increases (Fig. 25), starting from the outer side of the sealing element, in the direction towards the centre of its cross-section.

2.  Sealing element according to Claim 1, **characterized in that** it constitutes at least one annular formation (6).

3.  Sealing element according to Claim 2, **characterized in that** the annular formation (6) has an essentially circular cross-section.

4.  Sealing element according to Claim 3, **characterized in that** a second formation (6") is provided, which is of annular shape and is connected to the first formation (6') of annular shape by means of a flexible-tube-like intermediate region (4_) made of the same film-like material (3).

5.  Sealing element according to Claim 4, **characterized in that** the two annular formations (6', 6") are arranged at a predetermined distance from one another and the flexible-tube-like intermediate region (4_) is additionally laminated with a coating material, in particular a reinforcing material.

6.  Sealing element according to Claim 4, **characterized in that** the two formations (6', 6") of annular shape directly adjoin one another.

7.  Sealing element according to one or more of the preceding claims, **characterized in that** the expanded polytetrafluoroethylene is biaxially oriented.

8.  Sealing element according to one or more of the preceding claims, **characterized in that** it has a plurality of film-like materials (10-14) having different properties.

9.  Sealing element according to Claim 8, **characterized in that** it exhibits an asymmetric distribution of the material properties over the thickness ($d_2$) of the annular formation (6) or of the two annular formations (6', 6").

10. Sealing element according to one or more of the preceding claims, **characterized in that** it has at least one coated film-like material (3).

11. Sealing element according to Claim 10, **characterized in that** it has a film-like material (3) which is coated with a fluorinated ethylene-propylene copolymer (FEP).

12. Sealing element according to Claim 11, **characterized in that** it has a film-like material (3) which is coated with a perfluoroalkoxy (PFA).

13. Sealing element according to one or more of the preceding claims, **characterized in that** it has a film-like material (3) which is filled or impregnated with an elastomer.

14. Sealing element according to one or more of the preceding claims, **characterized in that** the density is about 0.1 g/cm$^3$ in the region of the outer side of the element (6, 6', 6") and is at most about 2.2 g/cm$^3$ in the region of the centre of the cross-section of the element (6, 6', 6"), which respectively corresponds to approximately the density of the film-like starting material and to approximately the density of the solid material.

15. Method for producing a continuous sealing element which is of cord-like design and has a multilayer structure, in particular a flange packing element, comprising the following method steps:

    a) at least one film-like material (3) made of expanded polytetrafluoroethylene (ePTFE), which initially has a uniform density distribution and a predetermined width, is wound onto an elongate mandrel, in the circumferential direction ($Pf_2$) of the said mandrel, until a desired thickness ($d_1$) of a resulting material reel (4) on the circumference of the mandrel (1) is reached;

    b) the material reel (4), in the region of one end of the mandrel (1), starting in the direction of the axis (2) of the mandrel (1), is rolled over along the circumference of the mandrel by means of a rolling-over operation acting on the material reel (4) essentially as far as the region of the opposite end of the mandrel (1), so that essentially an annular formation (6) comprising the rolled-over material reel (4) is produced;

c) the annular formation (6) is then subjected on a mandrel to a thermal treatment, during which treatment it shrinks such that it acquires a density gradient over the cross-section of the annular formation (6), as a result of which the density of the expanded polytetrafluoroethylene (ePTFE) increases, starting from the outer side of the annular formation (6), towards the centre of its cross-section.

16. Method according to Claim 15, **characterized in that** the mandrel (1) on which the thermal treatment takes place is the same mandrel as that on which the material reel (4) is produced, or is a mandrel of the same diameter.

17. Method according to Claim 15, **characterized in that** the mandrel on which the thermal treatment takes place has a smaller diameter than the mandrel (1) on which the material reel (4) is produced.

18. Method according to Claim 15, **characterized in that**, in method step b), the material reel (4) is only rolled over as far as a predetermined first circumferential region of the mandrel (1), and **in that** the material reel (4) is then, in the region of the opposite end of the mandrel (1), starting in the direction of the axis (2) of the mandrel (1), but in the opposite direction, rolled over along the circumference of the mandrel (1) by means of a second rolling-over operation acting on the material reel (4), essentially as far as a predetermined second circumferential region of the mandrel, so that a second annular formation (6") is produced from the rolled-over material reel (4), this operation being followed by a thermal treatment in accordance with method step c).

19. Method according to one of Claims 16 to 18, **characterized in that** a biaxially oriented polytetrafluoroethylene (ePTFE) is used.

20. Method according to one or more of Claims 15 to 19, **characterized in that** the thermal treatment is carried out such that the resulting density in the region of the outer side of the annular formation (6, 6', 6") is slightly higher than the initial density of the film-like material (3) and the resulting density in the region of the centre of the cross-section of the annular formation (6, 6', 6") is at most equal to the specific density of solid PTFE material.

21. Method according to Claim 20, **characterized in that** thermal treatment is carried out in such a manner that the density is about 0.1 $g/cm^3$ in the region of the outer side of the annular formation (6, 6', 6") and is at most about 2.2 $g/cm^3$ in the region of the centre of the cross-section of the annular formation (6, 6', 6").

22. Method according to one or more of Claims 15 to 21, **characterized in that** the thermal treatment is carried out in such a manner that the annular formation (6, 6', 6") is sintered after the shrinking.

23. Method according to one or more of Claims 15 to 22, **characterized in that** the duration of the thermal treatment is selected, as a function of the cross-sectional diameter of the annular formation (6, 6', 6"), in the range from 1 minute to 2 hours, preferably in the range from 3 minutes to 40 minutes.

24. Method according to Claim 17, **characterized in that** the diameter of the smaller mandrel is selected such that the film material (3) of the annular formation (6) shrinks such that the annular formation (6) assumes the diameter of the second mandrel as its internal diameter.

25. Method according to Claim 18, **characterized in that** the predetermined first circumferential region of the mandrel (1) and the predetermined second circumferential region of the mandrel (1) are spaced apart from one another in such a manner that the first essentially annular formation (6') and the second essentially annular formation (6") are at a corresponding distance from one another, remain connected to one another by means of a flexible-tube-like intermediate region (4_) of the material reel (4) and, in this configuration, are removed from the mandrel (1) following the thermal treatment, the flexible-tube-like intermediate region (4_) of the material reel (4) preferably being additionally laminated with a coating material, in particular a reinforcing material, prior to the thermal treatment and then being heat-treated, in particular sintered, together with the coating material applied.

26. Method according to Claim 18, **characterized in that** the two rolling-over operations, which act on the material reel (4) and start from mutually opposite ends of the mandrel (1), are carried out until the resulting first annular formation (6') and the resulting second annular formation (6") directly face one another on the circumference of the mandrel (1), the two resulting annular formations (6', 6") in this configuration being removed from the mandrel (1) following the thermal treatment.

27. Method according to one of Claims 25 or 26, **characterized in that** the two rolling-over operations, which act on the material reel (4), are carried out in such a manner that different thicknesses ($d_2$) of the two resulting, essentially annular formations (6', 6") are produced.

28. Method according to one or more of Claims 25 to 27, **characterized in that** one of the two formations (6', 6"), which are joined together by means of the flexible-tube-like intermediate region (4_) of the material reel, is transferred onto a second mandrel of smaller diameter and the diameter of this mandrel is selected such that the annular formation (6', 6"), after it has shrunk in the course of the thermal treatment, assumes the diameter of the second mandrel as its internal diameter, as a result of which a sealing element which is of essentially double-annular design is produced in a conical configuration.

29. Method according to one or more of Claims 15 to 28, **characterized in that** the mandrel (1) is heated until a temperature which corresponds to the sintering temperature of ePTFE is reached, in order in this way to sinter, in particular presinter, the film-like material (3) at the same time as the process of winding onto the mandrel (1), the mandrel preferably being heated to a temperature in the range between about 327°C and about 420°C.

30. Method according to one or more of Claims 15 to 29, **characterized in that** the heat in the thermal treatment is supplied by convection and/or radiation.

31. Method according to Claim 15, **characterized in that**, in method step a), a plurality of film-like material webs (10-14), in particular material webs having different properties and in each case having a predetermined width in the direction of the axis of the mandrel (1), are wound successively onto the mandrel, the material webs (10-14) at least partially overlapping one another and, with a predetermined uniform or different overlap width, being wound onto the mandrel (1) such that an asymmetric distribution of the material properties results over the thickness ($d_2$) of the resulting annular formation (6, 6', 6") during the subsequent rolling-over operation in accordance with method step b).

32. Method according to one or more of Claims 15 to 31, **characterized in that** the film-lime material (3) which is to be wound onto the mandrel (1) in accordance with method step a) according to Claim 15, is provided with an obliquely cut starting edge (3_) and with an obliquely cut end edge (3"), in order, in the course of the winding process, to produce in each case helically running starting and end regions of the resulting material reel (4) on the mandrel (1).

33. Method according to one or more of Claims 15 to 32, **characterized in that** an essentially cylindrical body, in particular a pipe section, is used as the mandrel (1).

34. Method according to one or more of Claims 15 to 33, **characterized in that** the formation (6, 6', 6"), which is of annular or double-annular shape, is subjected to a further orientation after the shrinking or sintering.

**Revendications**

1. Élément d'étanchéité homogène en cordon, constitué au moins d'un matériau filmogène spiralé (3) en polytétrafluoréthylène (PTFE) expansé, l'élément d'étanchéité présentant sur sa section de cordon (15) un gradient de masse volumique qui, partant de la face externe de l'élément d'étanchéité, augmente en direction du point central de sa section (figure 25).

2. Élément d'étanchéité selon la revendication 1, **caractérisé en ce qu'**il présente au moins une structure annulaire (6).

3. Élément d'étanchéité selon la revendication 2, **caractérisé en ce que** la structure annulaire (6) présente une section essentiellement circulaire.

4. Élément d'étanchéité selon la revendication 3, **caractérisé en ce qu'**il est prévu une deuxième structure annulaire (6") reliée à la première structure annulaire (6') par une zone intercalaire (4"') tubulaire exécutée dans le même matériau filmogène (3).

**5.** Élément d'étanchéité selon la revendication 4, **caractérisé en ce que** les deux structures annulaires (6',6'') sont disposées à une distance prédéfinie l'une de l'autre et **en ce que** la zone intercalaire (4''') tubulaire est en outre laminée avec un matériau de revêtement, notamment un matériau de renfort.

**6.** Élément d'étanchéité selon la revendication 4, **caractérisé en ce que** les deux structures annulaires (6',6'') sont directement adjacentes.

**7.** Élément d'étanchéité selon une ou plusieurs des revendications précédentes, **caractérisé en ce que** le polytétrafluoréthylène expansé est étiré biaxialement.

**8.** Élément d'étanchéité selon une ou plusieurs des revendications précédentes, **caractérisé en ce qu'**il présente plusieurs matériaux filmogènes (10-14) possédant des propriétés différentes.

**9.** Élément d'étanchéité selon la revendication 8, **caractérisé en ce qu'**il présente une répartition asymétrique des propriétés des matériaux sur l'épaisseur ($d_2$) de la structure annulaire (6) ou des deux structures annulaires (6',6'').

**10.** Élément d'étanchéité selon une ou plusieurs des revendications précédentes, **caractérisé en ce qu'**il présente au moins un matériau filmogène (3) enduit.

**11.** Élément d'étanchéité selon la revendication 10, **caractérisé en ce qu'**il présente un matériau filmogène (3) enduit d'éthylène-propylène fluoré (FEP).

**12.** Élément d'étanchéité selon la revendication 11, **caractérisé en ce qu'**il présente un matériau filmogène (3) enduit deperfluoralkoxy (PFA).

**13.** Élément d'étanchéité selon une ou plusieurs des revendications précédentes, **caractérisé en ce qu'**il présente un matériau filmogène (3) rempli ou imprégné d'un élastomère.

**14.** Élément d'étanchéité selon une ou plusieurs des revendications précédentes, **caractérisé en ce que** la masse volumique, dans la zone de la face externe de l'élément (6,6',6''), est de 0,1 g/cm$^3$ environ et de 2,2 g/cm$^3$ maximum environ, dans la zone du point central de la section de l'élément (6,6',6''), ce qui correspond d'une part à peu près à la masse volumique du matériau de départ filmogène et d'autre part à peu près à la masse volumique du matériau plein.

**15.** Procédé de fabrication d'un élément d'étanchéité homogène en cordon, constitué de plusieurs couches, notamment d'éléments d'étanchéité de bride, comprenant les opérations suivantes :

a) au moins un matériau filmogène (3) en polytétrafluoréthylène (PTFE) expansé, présentant une répartition tout d'abord uniforme de sa masse volumique et une largeur prédéfinie, est enroulé sur un mandrin allongé dans sa direction circonférentielle (Pf$_2$) jusqu'à obtention, à la circonférence du mandrin (1), d'une bobine de matériau (4) d'épaisseur ($d_1$) souhaitée ;
b) la bobine de matériau (4) est rembobinée dans la zone de l'une des extrémités frontales du mandrin (1), en commençant dans le sens de l'axe (2) du mandrin (1), le long de la circonférence du mandrin, par une opération de rembobinage agissant sur la bobine de matériau (4), essentiellement jusqu'à la zone de l'extrémité frontale opposée du mandrin (1), de manière à produire essentiellement une structure annulaire (6) à partir de la bobine de matériau (14) rembobinée ;
c) la structure annulaire (6) est alors soumise sur un mandrin à un traitement thermique et se contracte sous l'effet de ce traitement au point de présenter sur la section de la structure annulaire (6) une masse volumique, grâce à laquelle la masse volumique du polytétrafluoréthylène (PTFE) expansé, partant de la face externe de la structure annulaire(6), augmente dans le sens du point central de sa section.

**16.** Procédé selon la revendication 15, **caractérisé en ce que** le mandrin (1), sur lequel le traitement thermique a lieu, est le même que celui sur lequel la bobine de matériau (4) est produite ou alors un mandrin de même diamètre.

**17.** Procédé selon la revendication 15, **caractérisé en ce que** le mandrin, sur lequel le traitement thermique a lieu, présente un diamètre inférieur au mandrin (1) sur lequel la bobine de matériau (4) est produite.

**18.** Procédé selon la revendication 15, **caractérisé en ce que**, au cours de l'opération b), la bobine de matériau (4) n'est rembobinée que jusqu'à une première zone prédéfinie de la circonférence du mandrin (1) et **en ce que** la bobine de matériau (4) est ensuite rembobinée dans la zone de l'extrémité frontale opposée du mandrin (1), en commençant dans le sens de l'axe (2) du mandrin (1), mais en sens inverse, le long de la circonférence du mandrin (1), par une deuxième opération de rembobinage agissant sur la bobine de matériau (4), essentiellement jusqu'à une deuxième zone prédéfinie de la circonférence du mandrin, de sorte qu'une deuxième structure annulaire (6'') est produite à partir de la bobine de matériau (4) rembobinée, un traitement thermique étant ensuite appliqué selon l'opération c).

**19.** Procédé selon l'une des revendications 16 à 18, **caractérisé en ce que** un polytétrafluoréthylène étiré biaxialement est employé.

**20.** Procédé selon une ou plusieurs des revendications 15 à 19, **caractérisé en ce que** le traitement thermique s'effectue de manière à ce que la masse volumique résultante soit légèrement supérieure, dans la zone de la face externe de la structure annulaire(6,6',6''), à la masse volumique de départ du matériau filmogène (3) et **en ce que** la masse volumique résultante soit au maximum égale à la masse volumique spécifique du matériau plein en PTFE dans la zone du point central de la section de la structure annulaire (6,6',6'').

**21.** Procédé selon la revendication 20, **caractérisé en ce que** le traitement thermique s'effectue de manière à ce que la masse volumique, dans la zone de la face externe de la structure annulaire (6,6',6''), soit de 0,1 g/cm$^3$ environ et de 2,2 g/cm$^3$ maximum environ dans la zone du point central de la section de la structure annulaire (6,6',6'').

**22.** Procédé selon une ou plusieurs des revendications 15 à 21, **caractérisé en ce que** le traitement thermique s'effectue de manière à ce que la structure annulaire (6,6',6'') annulaire soit frittée après contraction.

**23.** Procédé selon une ou plusieurs des revendications 15 à 22, **caractérisé en ce que** la durée du traitement thermique est choisie en fonction du diamètre de la section de la structure annulaire (6,6',6'') dans une plage comprise entre 1 minute et 2 heures, de préférence dans une plage comprise entre 3 minutes et 40 minutes.

**24.** Procédé selon la revendication 17, **caractérisé en ce que** le diamètre du mandrin de dimension inférieure est choisi de sorte que le matériau filmogène (3) de la structure annulaire (6) se contracte tant que la structure annulaire (6) obtienne en tant que diamètre intérieur le diamètre du deuxième mandrin.

**25.** Procédé selon la revendication 18, **caractérisé en ce qu'**il est prévu d'espacer l'une de l'autre la première zone circonférentielle prédéfinie du mandrin (1) et la deuxième zone circonférentielle prédéfinie du mandrin (1) de manière à ce que la première structure essentiellement annulaire (6') et la deuxième structure essentiellement annulaire (6'') présentent un espacement correspondant, restent liées entre elles par la zone intercalaire (4''') tubulaire de la bobine de matériau (4) et soient retirées, dans cette configuration, du mandrin (1) à la suite du traitement thermique, la zone intercalaire (4''') tubulaire de la bobine de matériau (4) étant en outre laminée avant le traitement thermique de préférence avec un matériau de revêtement, notamment un matériau de renfort, puis soumise, conjointement avec le matériau de revêtement appliqué, à un traitement thermique, et en particulier frittée.

**26.** Procédé selon la revendication 18, **caractérisé en ce que** les deux opérations de rembobinage agissant sur la bobine de matériau (4) en partant des extrémités frontales opposées du mandrin (1) sont effectuées jusqu'à ce que la première structure annulaire (6') résultante et la deuxième structure annulaire (6'') résultante soient directement opposées à la circonférence du mandrin (1), les deux structures annulaires (6',6'') résultantes étant retirées, dans cette configuration, du mandrin (1) à la suite du traitement thermique.

**27.** Procédé selon l'une des revendications 25 ou 26, **caractérisé en ce que** les deux opérations de rembobinage agissant sur la bobine de matériau (4) sont effectuées de manière à produire des épaisseurs (d$_2$) différentes pour les deux structures essentiellement annulaires (6',6'') résultantes.

**28.** Procédé selon une ou plusieurs des revendications 25 à 27, **caractérisé en ce que** l'une des deux structures (6', 6'') reliées par la zone intercalaire (4''') tubulaire de la bobine de matériau est transférée à un deuxième mandrin de diamètre inférieur et **en ce que** son diamètre est choisi de sorte que, après contraction de la structure annulaire (6',6'') au cours du traitement thermique, celle-ci obtienne en tant que diamètre intérieur le diamètre du deuxième mandrin, un élément d'étanchéité essentiellement doublement annulaire de forme conique étant produit.

**29.** Procédé selon une ou plusieurs des revendications 15 à 28, **caractérisé en ce que** le mandrin (1) est chauffé jusqu'à ce qu'une température correspondant à la température de frittage du PTFE expansé soit atteinte, de manière à fritter en même temps, lors du processus de bobinage sur le mandrin (1), le matériau filmogène (3), en particulier à le pré-fritter, le mandrin étant porté de préférence à une température se situant dans une plage comprise entre 327°C et 420°C environ.

**30.** Procédé selon une ou plusieurs des revendications 15 à 29, **caractérisé en ce que** l'apport de chaleur s'effectue, lors du traitement thermique, par convection et/ou rayonnement.

**31.** Procédé selon la revendication 15, **caractérisé en ce que**, lors de l'opération a), plusieurs nappes de matériau filmogène (10-14), en particulier des nappes de matériau possédant des propriétés différentes, d'une largeur respectivement prédéfinie, sont bobinées successivement sur le mandrin dans le sens de l'axe du mandrin (1), les nappes de matériau (10-14) se chevauchant du moins en partie mutuellement et étant bobinées, pour une largeur de chevauchement constante ou différente prédéfinie, sur le mandrin (1) de sorte que, lors du processus de rembobinage consécutif conforme à l'opération b), une répartition asymétrique des propriétés du matériau est obtenue sur l'épaisseur ($d_2$) de la structure annulaire (6,6',6'') résultante.

**32.** Procédé selon une ou plusieurs des revendications 15 à 31, **caractérisé en ce que** le matériau filmogène (3) qui doit être bobiné sur le mandrin (1), conformément à l'étape a) et selon la revendication 15, présente un bord initial (3''') coupé en biais et un bord final (3'') coupé en biais pour produire sur le mandrin (1), afin de générer lors du processus de bobinage, les zones initiales et finales respectivement hélicoïdales de la bobine de matériau (4) résultante.

**33.** Procédé selon une ou plusieurs des revendications 15 à 32, **caractérisé en ce qu'**un corps essentiellement cylindrique, notamment une section de tube, est utilisé en tant que mandrin (1).

**34.** Procédé selon une ou plusieurs des revendications 15 à 33, **caractérisé en ce que** la structure annulaire ou doublement annulaire (6,6',6'') est soumise, après contraction ou frittage, à un nouvel étirage.

2

$Pf_1$

3

$Pf_2$

1

$h$

Fig. 1

5

4'

$d_1$

1

4

3'

3

Fig. 2

$D_1$

Fig. 3

Fig. 4

Fig. 5

Fig. 7C

EP 0 829 662 B1

Fig. 6

Fig. 7A

Fig. 7B

Fig. 7D

Fig. 7E

26

Fig. 8

Fig. 9

Fig. 10

Fig. 11

EP 0 829 662 B1

Fig. 12

Fig. 13

28

Fig. 14

Fig. 15

Fig. 16

Fig. 17

Fig. 18

Fig. 19

EP 0 829 662 B1

Fig. 21

Fig. 20

33

EP 0 829 662 B1

Fig. 22

34

EP 0 829 662 B1

Fig. 23

35

Fig. 24

Fig. 25

Fig. 26